# EUROPEAN PATENT APPLICATION

(11) **EP 4 804 434 A1**
(43) Date of publication of application: **09.09.2026**
(21) Application number: 24890422.9
(22) Date of filing: 17.10.2024
(51) Int. Cl.: H04L 1/00, H04L 25/02

(54) **METHOD AND APPARATUS FOR COMMUNICATION, DEVICE, STORAGE MEDIUM, AND PROGRAM PRODUCT**

(30) Priority: 14.11.2023 CN 202311524435
(71) Applicant: Huawei Technologies Co., Ltd., Shenzhen, Guangdong 518129 (CN)
(72) Inventor: TANG, Zihan, Shenzhen, Guangdong 518129 (CN); MA, Mengyao, Shenzhen, Guangdong 518129 (CN); YAN, Min, Shenzhen, Guangdong 518129 (CN)
(74) Representative: Pfenning, Meinig & Partner mbB
(86) International application number: PCT/CN2024/125479
(87) International publication number: WO 2025/103064

(57) **Abstract**

Embodiments of this application provide a method and a device for communication, a storage medium, and a program product. In the method, a data compression apparatus sends a first data matrix, followed by a projection result and a projection residual of a second data matrix. The projection result is determined based on a projection matrix derived from the second data matrix and the first data matrix, and the projection residual is determined based on the second data matrix and the projection result. By leveraging the correlation between the first data matrix and the second data matrix, this method improves compression efficiency and saves transmission bandwidth or storage resources.

## Description

This application claims priority to Chinese Patent Application No. 202311524435.1, filed with the China National Intellectual Property Administration on November 14, 2023 and entitled "METHOD, APPARATUS, AND DEVICE FOR COMMUNICATION, STORAGE MEDIUM, AND PROGRAM PRODUCT", which is incorporated herein by reference in its entirety.

### TECHNICAL FIELD

Embodiments of this application generally relate to the communication field, and more specifically, to a method, a terminal device, and a network device for communication, a computer-readable storage medium, and a computer program product.

### BACKGROUND

Native air interface data may include integrated sensing and communication data, artificial intelligence (Artificial Intelligence, AI) model data, channel state information (Channel State Information, CSI) data of a multi-antenna system, and the like. Native data is characterized by high dimensionality and large data amount, and its exchange and transmission consume substantial air interface resources. Data compression is required to reduce the occupation of air interface resources or save storage resources. Other data, such as application interaction data on the Internet, also requires compression to save network bandwidth or storage resources.

### SUMMARY

Embodiments of this application provide a data compression and decompression solution that achieves higher compression efficiency while saving transmission resources. In addition to being applicable to native air interface data, embodiments of this disclosure can be applicable to, for example, Internet interaction data or other data, and may be widely used in terminal devices or network devices in future wireless communication scenarios.

According to a first aspect, a communication method is provided. The method may be performed by a data compression apparatus. Unless otherwise specified, the data compression apparatus in embodiments of this application may be the data compression apparatus (for example, implemented as a terminal device or a network device), or may be a component (for example, a processor, a chip, or a chip system) in the data compression apparatus, or may be a logical module or software that can implement all or some functions of the data compression apparatus. The following provides descriptions by using an example in which an execution body is the data compression apparatus. In the method, the data compression apparatus sends a first data matrix. Further, the data compression apparatus sends a projection result and a projection residual of a second data matrix. The projection result is determined based on a projection matrix derived from the second data matrix and the first data matrix, and the projection residual is determined based on the second data matrix and the projection result. In this way, correlation between the first data matrix and the second data matrix can be fully utilized, to improve compression efficiency, and save transmission bandwidth or storage resources.

According to a second aspect, a communication method is provided. The method may be performed by a data decompression apparatus. Unless otherwise specified, the data decompression apparatus in embodiments of this application may be the data decompression apparatus (for example, implemented as a terminal device or a network device), or may be a component (for example, a processor, a chip, or a chip system) in the data decompression apparatus, or may be a logical module or software that can implement all or some functions of the data decompression apparatus. The following provides descriptions by using an example in which an execution body is the data decompression apparatus. In the method, the data decompression apparatus receives a first data matrix. Further, the data decompression apparatus receives a projection result and a projection residual of a second data matrix. Further, the data decompression apparatus obtains, based on the first data matrix, the projection result, and the projection residual, the second data matrix or an approximate matrix of the second data matrix. The projection result is determined based on a projection matrix derived from the second data matrix and the first data matrix, and the projection residual is determined based on the second data matrix and the projection result. In this way, data compressed by a data compression apparatus can be decompressed and restored, so that correlation between the first data matrix and the second data matrix is fully utilized, to improve compression efficiency, and save transmission bandwidth or storage resources.

In some implementations, the projection matrix is determined in the following manner: The data compression apparatus selects a predetermined quantity of columns from a reference matrix to form the projection matrix, where the reference matrix is the first data matrix or a submatrix of the first data matrix. In this way, the projection matrix can be constructed in a simple manner, to reduce an operation amount.

In some implementations, the projection matrix is determined in the following manner: The data compression apparatus determines a projection basis matrix based on a reference matrix, and selects a predetermined quantity of columns from the projection basis matrix to form the projection matrix. The reference matrix is the first data matrix or a submatrix of the first data matrix. In this way, a base with high energy may be extracted through LRMA, so that features of the reference matrix are fully extracted, to reduce the compression error.

In some implementations, determining the projection basis matrix based on the reference matrix includes: performing matrix decomposition on the reference matrix to determine the projection basis matrix. In this way, the features of the reference matrix can be fully extracted, to reduce the compression error.

In some implementations, the matrix decomposition includes any one of the following: low-rank matrix approximation (LRMA) decomposition, SVD decomposition, or QR decomposition. In this way, the matrix decomposition can be flexibly implemented.

In some implementations, the data compression apparatus further sends one or more of the following: first indication information, indicating a quantity of columns of the projection matrix; second indication information, indicating whether the projection matrix is based on the reference matrix or based on a projection basis matrix obtained by performing LRMA decomposition on the reference matrix; or third indication information, indicating a position of a column of the projection matrix in the reference matrix or the projection basis matrix. In this way, synchronization between the data compression apparatus and the data decompression apparatus can be implemented, to facilitate accurate decompression.

In some implementations, the data decompression apparatus further receives one or more of the following: first indication information, indicating a quantity of columns of the projection matrix; second indication information, indicating whether the projection matrix is based on the reference matrix or based on a projection basis matrix obtained by performing LRMA decomposition on the reference matrix; or third indication information, indicating a position of a column of the projection matrix in the reference matrix or the projection basis matrix. In this way, synchronization between the data compression apparatus and the data decompression apparatus can be implemented, to facilitate accurate decompression.

In some implementations, that the data compression apparatus determines the projection matrix includes: The data compression apparatus selects a subspace of a predetermined quantity of dimensions from a column space obtained by spanning a reference matrix, where the projection matrix represents the subspace, and the reference matrix is the first data matrix or a submatrix of the first data matrix. In this way, the second data matrix can be accurately fitted, to reduce the compression error.

In some implementations, the subspace is selected to minimize a norm of a projection residual obtained by projecting the second data matrix onto the projection matrix. In this way, the second data matrix can be accurately fitted, to reduce the compression error.

In some implementations, that the data compression apparatus determines the projection matrix includes: The data compression apparatus performs QR decomposition on the reference matrix to determine a matrix Q. Further, the data compression apparatus performs singular value decomposition on a product of a transpose of the matrix Q and the data matrix to obtain an eigenvector matrix. Further, the data compression apparatus determines a subspace selection matrix based on a predetermined quantity of leading columns of the eigenvector matrix. Further, the data compression apparatus determines the projection matrix based on the subspace selection matrix and the reference matrix. In this way, the generated projection matrix can accurately fit the second data matrix, to reduce the compression error.

In some implementations, that the data compression apparatus determines the projection matrix includes: The data compression apparatus performs QR decomposition on reference data C to obtain a matrix Q, where a formula of the QR decomposition is ***C*** = ***Q*** × ***R***, $Q ∈ {ℝ}^{m \times k}$ with orthogonal columns, and $R ∈ {ℝ}^{k \times k}$. Further, the data compression apparatus performs SVD decomposition on a matrix Q^{T}G to obtain a matrix U, where G is the second data matrix, and a formula is ***Q**^{T}**G*** = ***UΣV^{T}***. Further, the data compression apparatus obtains first d columns of the matrix U, where the first d columns are denoted as ***Ŝ**.** Further, the data compression apparatus obtains a subspace selection matrix ***S**** = ***R*⁻¹*Ŝ****. Further, the data compression apparatus obtains the projection matrix ***P**** = ***C*** × ***S**** . In this way, the generated projection matrix can accurately fit the second data matrix, to reduce the compression error.

In some implementations, that the data compression apparatus determines the projection matrix includes: The data compression apparatus solves the following optimization problem, where G is the second data matrix, and C is the reference matrix; and ${S}^{∗} = {argmin}_{\begin{matrix}P = C \times S \\ S ∈ {ℝ}^{k \times d}\end{matrix}} {\left‖G-P{\left({P}^{T}P\right)}^{- 1}{P}^{T}G\right‖}_{F}^{2}$. In this way, the generated projection matrix can accurately fit the second data matrix, to reduce the compression error.

In some implementations, the method performed by the data compression apparatus further includes: sending fourth indication information, where the fourth indication information indicates the subspace selection matrix, and the subspace selection matrix is used together with the reference matrix to determine the projection matrix. In this way, the subspace selection matrix can be accurately indicated to the data decompression apparatus, to facilitate accurate decompression.

In some implementations, the method performed by the data decompression apparatus further includes: receiving fourth indication information, where the fourth indication information indicates the subspace selection matrix, and the subspace selection matrix is used together with the reference matrix to determine the projection matrix. In this way, the subspace selection matrix can be accurately indicated by the data compression apparatus, to facilitate accurate decompression.

In some implementations, the method performed by the data compression apparatus further includes: receiving feedback information for the first data matrix; and determining the second data matrix based on the feedback information and the first data. In this way, at least a part of the first data matrix is accurately selected to compress the second data matrix, to improve compression accuracy.

In some implementations, the method performed by the data compression apparatus further includes: sending fifth indication information for the first data matrix; and determining the second data matrix based on the fifth indication information and the first data matrix.

In some implementations, the method performed by the data decompression apparatus further includes: sending feedback information for the first data matrix; and determining the second data matrix based on the feedback information and the first data. In this way, at least a part of the first data matrix is accurately selected to decompress the second data matrix, to improve decompression accuracy.

In some implementations, the method performed by the data decompression apparatus further includes: receiving fifth indication information for the first data matrix; and determining the second data matrix based on the fifth indication information and the first data matrix.

In some implementations, the feedback information or the fifth indication information includes one or more of the following: subset indication information, indicating the first data matrix or a submatrix of the first data matrix; or confidence information, indicating a confidence level of the first data. In this way, a part of the first data matrix can be accurately indicated, to help accurately compress the second data matrix.

In some implementations, the first data matrix has a first granularity, the second data matrix has a second granularity, and the first granularity is greater than the second granularity. In this way, the data compression method may be applied to data of different granularities, to extend an application scope of the method.

In some implementations, the first data matrix is sampling data of a geographical space at a first resolution, second data is sampling data of the geographical space at a second resolution higher than the first resolution, and the subset indication information indicates spatial location information of a subset of the first data. Additionally or alternatively, the method performed by the data compression apparatus may further use the following: The first data matrix is a plurality of cluster centers of a plurality of data classes determined by performing clustering on raw data, the second data matrix is data included in one or more data classes among the plurality of data classes, and the subset indication information indicates one or more cluster centers, among the plurality of cluster centers, corresponding to the one or more data classes. In this way, the second data matrix may be collected and compressed by using different resolutions or in a clustering manner, to improve compression accuracy and reduce errors.

In some implementations, the reference matrix is determined based on one or more of the following: the feedback information for the first data matrix; the submatrix of the first data matrix; or the first data matrix. In this way, the reference matrix may be generated in a plurality of flexible manners, to facilitate data compression.

In some implementations, the second data matrix is not divided and corresponds as a whole to the reference matrix; or the second data matrix is divided into a plurality of data groups, and the plurality of data groups respectively correspond to a plurality of submatrices of the reference matrix. In this way, the second data matrix may be flexibly processed in a grouped or non-grouped manner, to facilitate appropriate compression processing.

In some implementations, the method performed by the data compression apparatus further includes sending one or more of the following: first configuration information, indicating whether the feedback information for the first data matrix is based on an index or a bitmap; second configuration information, indicating whether confidence feedback for the first data matrix is enabled; third configuration information, indicating whether the first data matrix is based on a geographical location or clustering; fourth configuration information, indicating whether the reference matrix is determined based on the feedback information for the first data matrix or based on the first data matrix; or fifth configuration information, indicating whether the second data matrix corresponds as a whole to the reference matrix, or whether the plurality of data groups obtained by dividing the second data matrix respectively correspond to the plurality of submatrices of the reference matrix. In this way, the data compression apparatus can accurately send configuration information to the data decompression apparatus, to facilitate synchronization between the data compression apparatus and the data decompression apparatus and facilitate accurate decompression performed by the data decompression apparatus.

In some implementations, the method performed by the data compression apparatus further includes: before sending the first data matrix, sending at least one of the first configuration information, the second configuration information, the third configuration information, the fourth configuration information, or the fifth configuration information. This facilitates synchronization between the data compression apparatus and the data decompression apparatus, and facilitates accurate decompression performed by the data decompression apparatus.

In some implementations, the method performed by the data decompression apparatus further includes receiving one or more of the following: first configuration information, indicating whether the feedback information for the first data matrix is based on an index or a bitmap; second configuration information, indicating whether confidence feedback for the first data matrix is enabled; third configuration information, indicating whether the first data matrix is based on a geographical location or clustering; fourth configuration information, indicating whether the reference matrix is determined based on the feedback information for the first data matrix or based on the first data matrix; or fifth configuration information, indicating whether the second data matrix corresponds as a whole to the reference matrix, or whether the plurality of data groups obtained by dividing the second data matrix respectively correspond to the plurality of submatrices of the reference matrix. In this way, the data decompression apparatus can accurately receive configuration information from the data compression apparatus, to facilitate synchronization between the data decompression apparatus and the data compression apparatus and facilitate accurate decompression performed by the data decompression apparatus.

In some implementations, the method performed by the data decompression apparatus further includes: before receiving the first data matrix, receiving at least one of the first configuration information, the second configuration information, the third configuration information, the fourth configuration information, or the fifth configuration information. This facilitates synchronization between the data compression apparatus and the data decompression apparatus, and facilitates accurate decompression performed by the data decompression apparatus.

In some implementations, the method performed by the data compression apparatus further includes sending one or more of the following: sixth configuration information, indicating whether the projection matrix is based on the column space of the reference matrix or based on a subspace of the column space; or seventh configuration information, used to identify the reference matrix from the first data matrix. In this way, the method for generating the projection matrix can be accurately identified, which facilitates synchronization between the data compression apparatus and the data decompression apparatus, and facilitates accurate decompression performed by the data decompression apparatus.

In some implementations, before sending the projection result and the projection residual, the data compression apparatus sends at least one of the sixth configuration information or the seventh configuration information. In this way, the method for generating the projection matrix can be accurately identified, which facilitates synchronization between the data compression apparatus and the data decompression apparatus, and facilitates accurate decompression performed by the data decompression apparatus.

In some implementations, the method performed by the data decompression apparatus further includes receiving one or more of the following: sixth configuration information, indicating whether the projection matrix is based on the column space of the reference matrix or based on a subspace of the column space; or seventh configuration information, used to identify the reference matrix from the first data matrix. In this way, the method for generating the projection matrix can be accurately identified, which facilitates synchronization between the data compression apparatus and the data decompression apparatus, and facilitates accurate decompression performed by the data decompression apparatus.

In some implementations, before receiving the projection result and the projection residual, the data decompression apparatus receives at least one of the sixth configuration information or the seventh configuration information. In this way, the method for generating the projection matrix can be accurately identified, which facilitates synchronization between the data compression apparatus and the data decompression apparatus, and facilitates accurate decompression performed by the data decompression apparatus.

According to a third aspect, an apparatus is provided. The apparatus may be the data compression apparatus (for example, implemented as a terminal device or a network device), or may be a component (for example, a processor, a chip, or a chip system) in the data compression apparatus, or may be a logical module or software that can implement all or some functions of the data compression apparatus. The following provides descriptions by using an example in which the apparatus is the data compression apparatus. The apparatus includes: a first data matrix sending module, configured to send a first data matrix; and a result sending module, configured to send a projection result and a projection residual of a second data matrix. The projection result is determined based on a projection matrix derived from the second data matrix and the first data matrix, and the projection residual is determined based on the second data matrix and the projection result. In this way, correlation between the first data matrix and the second data matrix can be fully utilized, to improve compression efficiency, and save transmission bandwidth or storage resources.

According to a fourth aspect, an apparatus is provided. The apparatus may be the data decompression apparatus (for example, implemented as a network device or a terminal device), or may be a component (for example, a processor, a chip, or a chip system) in the data decompression apparatus, or may be a logical module or software that can implement all or some functions of the data decompression apparatus. The following provides descriptions by using an example in which the apparatus is the data decompression apparatus. The apparatus includes: a first data matrix receiving module, configured to receive a first data matrix; a result receiving module, configured to receive a projection result and a projection residual of a second data matrix; and a second data matrix obtaining module, configured to obtain, based on the first data matrix, the projection result, and the projection residual, the second data matrix or an approximate matrix of the second data matrix. The projection result is determined based on a projection matrix derived from the second data matrix and the first data matrix, and the projection residual is determined based on the second data matrix and the projection result. In this way, data compressed by a data compression apparatus can be decompressed and restored, so that correlation between the first data matrix and the second data matrix is fully utilized, to improve compression efficiency, and save transmission bandwidth or storage resources.

According to a fifth aspect, a system is provided, including the apparatuses in the third aspect and the fourth aspect. In this way, correlation between a first data matrix and a second data matrix can be fully utilized, to improve compression efficiency, and save transmission bandwidth or storage resources.

According to a sixth aspect, a device is provided. The device may be the data compression apparatus or the data decompression apparatus in the foregoing method embodiments, or may be a chip disposed in the data compression apparatus or the data decompression apparatus. The device includes a processor and a memory. The memory is configured to store a computer program or instructions. When the processor runs the computer program or the instructions, the data compression apparatus or the data decompression apparatus is enabled to perform the method performed by the data compression apparatus or the data decompression apparatus in the foregoing method embodiments.

According to a seventh aspect, an embodiment of this application provides a computer-readable storage medium. The computer-readable storage medium stores machine-executable instructions. When the machine-executable instructions are run, the method performed by the data compression apparatus or the data decompression apparatus in the foregoing aspects is implemented.

According to a ninth aspect, a computer program product is provided. The computer program product includes computer program code. When the computer program code is run, the method performed by the data compression apparatus or the data decompression apparatus in the foregoing aspects is performed.

### BRIEF DESCRIPTION OF DRAWINGS

FIG. 1A shows a communication system in which embodiments of this application may be implemented;
FIG. 1B is a block diagram of compressing and transmitting native air interface data;
FIG. 1C is a diagram of low-rank matrix approximation;
FIG. 1D is a diagram of a first scenario of data transmission;
FIG. 1E is a diagram of a second scenario of data transmission;
FIG. 2 is a flowchart of data compression and decompression according to an embodiment of this application;
FIG. 3A is a flowchart of transmitting a first data matrix and a second data matrix according to an embodiment of this application;
FIG. 3B is a diagram of transmitting a first data matrix and a second data matrix according to an embodiment of this application;
FIG. 4A is a diagram of performing projection compression on a given projection matrix according to an embodiment of this application;
FIG. 4B is a flowchart of performing projection compression on a given projection matrix according to an embodiment of this application;
FIG. 5A is a diagram of generating a projection matrix through column selection or LRMA decomposition according to an embodiment of this application;
FIG. 5B is a flowchart of generating a projection matrix through column selection or LRMA decomposition to perform data compression according to an embodiment of this application;
FIG. 6A is a diagram of subspace projection according to an embodiment of this application;
FIG. 6B is a flowchart of generating a projection matrix through subspace projection to perform data compression according to an embodiment of this application;
FIG. 7A is a diagram of a radio frequency map (RF map) according to an embodiment of this application;
FIG. 7B is a diagram of a manner of dividing and retrieving coarse-grained/finer-grained data based on a location according to an embodiment of this application;
FIG. 7C is a diagram of a manner of dividing and retrieving coarse-grained/finer-grained data based on clustering according to an embodiment of this application;
FIG. 7D is a flowchart of data compression based on retrieval according to an embodiment of this application;
FIG. 8A is a diagram of non-grouped data compression according to an embodiment of this application;
FIG. 8B is a diagram of grouped data compression according to an embodiment of this application;
FIG. 9 is a flowchart of comprehensive signaling interaction according to an embodiment of this application;
FIG. 10A is a diagram of a compression effect on radio frequency map data according to an embodiment of this application;
FIG. 10B is a diagram of a compression effect on a channel matrix according to an embodiment of this application;
FIG. 11 is a flowchart of a data compression method according to an embodiment of this application;
FIG. 12 is a flowchart of a data decompression method according to an embodiment of this application;
FIG. 13 is a simplified block diagram of an example device in a possible implementation according to an embodiment of this application;
FIG. 14 is a simplified block diagram of a communication apparatus in a possible implementation according to an embodiment of this application; and
FIG. 15 is a simplified block diagram of a network device in a possible implementation according to an embodiment of this application.

### DESCRIPTION OF EMBODIMENTS

To make objectives, technical solutions, and advantages of embodiments of this application clearer, the following further describes embodiments of this application in detail with reference to the accompanying drawings. Specific operation methods, function descriptions, and the like in method embodiments may also be applied to apparatus embodiments or system embodiments.

Native air interface data main includes integrated sensing and communication data, AI model data, CSI data of a multi-antenna system, and the like. The native data is high-dimensional and large in amount, and interaction and transmission of the native data occupy a large quantity of air interface resources. A data compression technology can greatly reduce occupation of air interface resources while meeting a specific distortion requirement or task precision requirement. Data needs to be compressed to reduce occupation of the air interface resources. Other data, such as application interaction data on the Internet, also requires compression to save network bandwidth or storage resources.

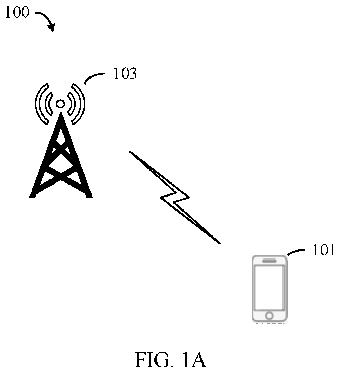

FIG. 1A shows a communication system in which data compression and decompression can be implemented according to an embodiment of this application. As shown in FIG. 1A, the communication methods provided in embodiments of this application may be applied to a wireless communication system 100. In the wireless communication system 100, a terminal device 101 and a network device 103 are shown. Data compression may be implemented by the terminal device 101, and data decompression may be implemented by the network device 103. Alternatively, on the contrary, data compression may be implemented by the network device 103, and data decompression may be implemented by the terminal device 101. In the wireless communication system 100, the network device 103, for example, a base station (Base Station, BS), provides a communication service for the terminal device 101, for example, a mobile station (Mobile Station, MS). The base station includes a baseband unit (Baseband Unit, BBU) and a remote radio unit (Remote Radio Unit, RRU). The BBU and the RRU may be placed at different places. For example, the RRU is remote and placed in a heavy-traffic area, and the BBU is placed in a central equipment room. Alternatively, the BBU and the RRU may be placed in a same equipment room. Alternatively, the BBU and the RRU may be different components at a same rack. A person of ordinary skill in the art may understand that data compression and decompression may alternatively be implemented between two terminal devices that communicate with each other through a sidelink, or between two network devices, or between two devices that use a wired link. Data compression and decompression may also be used for data storage in a medium like a hard disk, Flash, a read-only memory (Read-Only Memory, ROM), or a random access memory (Random Access Memory, RAM). This is not limited in embodiments of this disclosure.

The wireless communication system in embodiments of this application includes but is not limited to: a narrowband internet of things (Narrowband Internet of Things, NB-IoT) system, a global system for mobile communications (Global System for Mobile Communications, GSM) system, an enhanced data rate for GSM evolution (Enhanced Data rate for GSM Evolution, EDGE) system, a wideband code division multiple access (Wideband Code Division Multiple Access, WCDMA) system, a code division multiple access 2000 (Code Division Multiple Access 2000, CDMA2000) system, a time division-synchronization code division multiple access (Time Division-Synchronization Code Division Multiple Access, TD-SCDMA) system, a long term evolution (Long Term Evolution, LTE) system, three major application scenarios of a 5G mobile communication system: eMBB, URLLC, and eMTC, 6G, and the like.

It should be understood that the wireless communication system is applicable to both a high-frequency scenario (above 6G) such as a millimeter wave, and is also applicable to a low-frequency scenario (sub 6G). An application scenario of the wireless communication system includes but is not limited to a communication system like a 5th generation (5G) system or a new radio (new radio, NR) communication system, a future evolved public land mobile network (public land mobile network, PLMN) system, or the like.

The terminal device 101 shown above may be user equipment (user equipment, UE), a terminal (terminal), an access terminal, a terminal unit, a terminal station, a mobile station (mobile station, MS), a remote station, a remote terminal, a mobile terminal (mobile terminal), a wireless communication device, a terminal agent, a terminal device, or the like. The terminal device 110 may alternatively be a communication chip having a communication module, or may be a vehicle having a communication function, or a vehicle-mounted device (for example, a vehicle-mounted communication apparatus or a vehicle-mounted communication chip), or the like. The terminal device 101 may have a wireless transceiver function. The terminal device can perform communication (for example, wireless communication) with one or more network devices in one or more communication systems, and accepts a network service provided by the network device. The network device herein includes but is not limited to the network device (103) shown in the figure. A person of ordinary skill in the art may understand that the data compression and decompression scenario shown in FIG. 1A may also be applicable to a scenario between network devices, or between terminal devices, or the like. This is not limited in this disclosure.

The terminal device 101 may be a cellular phone, a cordless phone, a session initiation protocol (session initiation protocol, SIP) phone, a wireless local loop (wireless local loop, WLL) station, a personal digital assistant (personal digital assistant, PDA) device, a handheld device having a wireless communication function, a computing device, or another processing device connected to a wireless modem, a vehicle-mounted device, a wearable device, a terminal apparatus in a future 5G network, a terminal apparatus in a further evolved PLMN network, or the like.

The terminal device 101 may be specifically a mobile phone (mobile phone), a tablet computer (pad), a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like.

In addition, the terminal device 101 may be deployed on land, including an indoor or outdoor scenario and a handheld or vehicle-mounted scenario. The terminal device 101 may also be deployed on a water surface (for example, on a ship). The terminal device 101 may be further deployed in the air (for example, on an airplane, a balloon, and a satellite). The network device (103) may be an access network device (or referred to as an access network site). The access network device is a device that provides a network access function, for example, a radio access network (radio access network, RAN) base station. The network device (103) may specifically include a base station (base station, BS), or include a base station, a radio resource management device configured to control the base station, and the like. The network device (103) may further include a relay station (relay device), an access point, a base station or an NR base station in a 5G network, a base station in a future evolved PLMN network, and the like. The network device (103) may be a wearable device or a vehicle-mounted device. Alternatively, the network device (103) may be a communication chip having a communication module.

For example, the network device (103) includes but is not limited to a base station (gNodeB, gNB) in 5G, an evolved NodeB (evolved NodeB, eNB) in a long term evolution (long term evolution, LTE) system, a radio network controller (radio network controller, RNC), a radio controller in a cloud radio access network (cloud radio access network, CRAN) system, a base station controller (base station controller, BSC), a home base station (for example, a home evolved NodeB, or a home NodeB, HNB), a baseband unit (baseband unit, BBU), a transmitting and receiving point (transmitting and receiving point, TRP), a transmitting point (transmitting point, TP), and a mobile switching center, or may be an evolved (evolved) NodeB (eNB or eNodeB) in LTE, or may be a base station device in a future 5G network or an access network device in a future evolved PLMN, or may be a wearable device or a vehicle-mounted device.

In some deployments, the network device may include a central unit (central unit, CU) and a distributed unit (distributed unit, DU). The network device may further include an active antenna unit (active antenna unit, AAU). The CU implements some functions of the network device, and the DU implements some other functions of the network device. For example, the CU is responsible for processing a non-real-time protocol and service, and implementing functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified as a network device in an access network (radio access network, RAN), or the CU may be classified as a network device in a core network (core network, CN). This is not limited in embodiments of this application. Network device examples include but are not limited to a NodeB (NodeB or NB), an evolved NodeB (eNodeB or eNB), a next-generation NodeB (gNB), a transmitting and receiving point (TRP), a remote radio unit (RRU), a radio head (RH), a remote radio head (RRH), an IAB node, and a low power node, for example, a femto node, a pico node, a reconfigurable intelligent surface (RIS), and a network-controlled repeater.

In addition, the network device (103) may be connected to a core network (core network, CN) device, and the core network device may be configured to provide a core network service for the access network device (103) and the terminal device (101). The core network device may correspond to different devices in different systems. For example, in 3G, the core network device may correspond to a serving general packet radio service (general packet radio service, GPRS) support node (serving GPRS support node, SGSN) and/or a gateway GPRS support node (gateway GPRS Support Node, GGSN). In 4G, the core network device may correspond to a mobility management entity (mobility management entity, MME) and/or a serving gateway (serving gateway, S-GW). In 5G, the core network device may correspond to an access and mobility management function (access and mobility management function, AMF), a session management function (session management function, SMF), or a user plane function (user plane function, UPF).

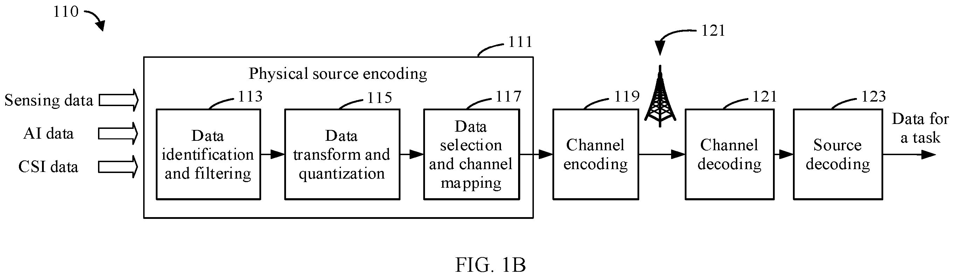

FIG. 1B is a block diagram of compressing and transmitting native air interface data. In a block diagram 110, at a transmit end, sensing data, AI data, and CSI data undergoes data identification and filtering 113, data transform and quantization 115, and data selection and channel mapping 117 in physical source encoding 111, undergoes channel encoding 119, and then enters a receive end through a channel. At the receive end, channel decoding 121 and source decoding 123 are performed on the data received through the channel, to obtain data for a task. The channel may be, for example, a radio channel 121. A person of ordinary skill in the art may understand that the channel may alternatively be a wired channel. This is not limited in embodiments of this disclosure. A person of ordinary skill in the art may understand that the scenario of transmitting compressed data through the channel may alternatively be replaced with a scenario of storing compressed data in a medium. This is not limited in embodiments of this disclosure.

Based on a specific scenario, the native air interface data has various forms of redundancy, and data compression may be performed by mining data redundancy. For example, a large amount of content in a sensed original signal has little impact on a subsequent task, and discarding the content can greatly reduce a data amount. Sensed point cloud data is correlated in time and space, and a channel matrix is highly correlated in frequency domain and spatial angle domain.

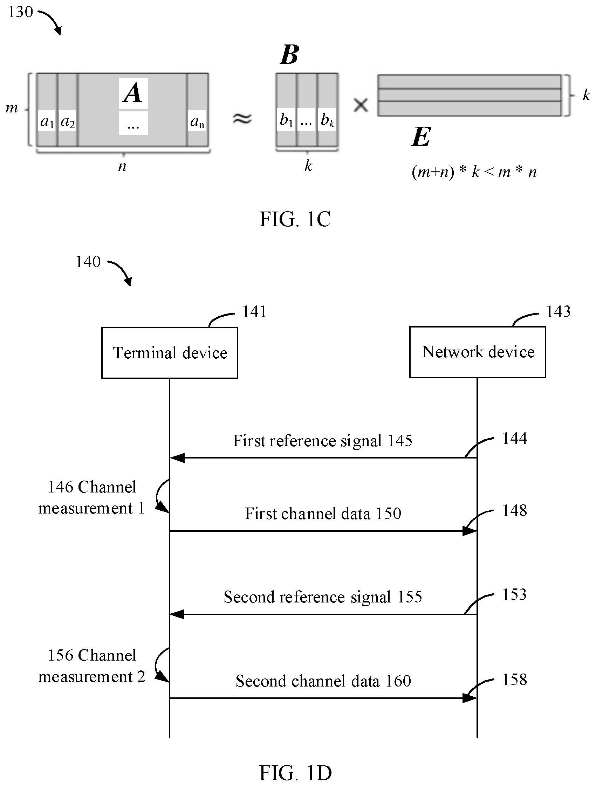

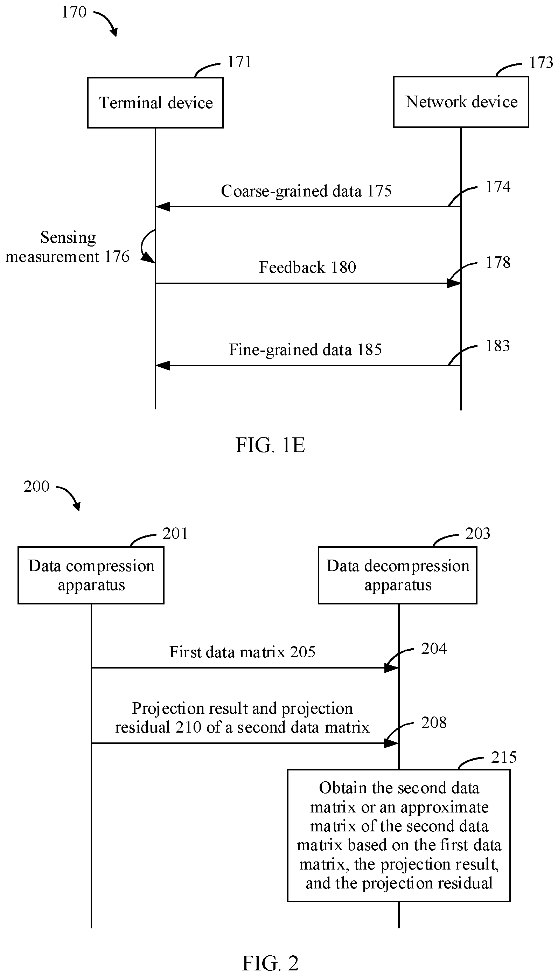

Low-rank matrix approximation (Low-Rank Matrix Approximation, LRMA) is a method for mining data correlation for data compression. A principle of the method is shown in FIG. 1C. Based on the Eckart-Young-Mirsky theory or truncated singular value decomposition (Singular Value Decomposition, SVD), a matrix A with m rows and n columns is approximately equal to a product of a matrix B with m rows and k columns and a matrix E with k rows and n columns. The columns of the matrix B are orthogonal to each other, and may be used as a projection subspace. A projection error of each column of the matrix A in the projection subspace approaches a minimum value. Through the LRMA-based compression method, redundancy of correlation between columns in the data matrix A can be mined. In many scenarios of native data compression, the system may not transmit data only once, but may transmit data a plurality of times. For example, in a CSI scenario, periodic interval feedbacks may be used. For example, in a first scenario (a CSI scenario) shown in FIG. 1D, a terminal device 141 separately performs channel measurement 146 and channel measurement 156 based on reference signals, for example, a first reference signal 145 and a second reference signal 155, sent by a network device 143, to obtain first channel data 150 and second channel data 160. For example, the first channel data 150 and the second channel data 160 may be channel frequency domain transmission functions between the terminal device 141 and the network device 143. In a scenario in which a moving speed of the terminal device 141 is not very high, the first channel data 150 and the second channel data 160 may have time correlation. In a point cloud or radio frequency map (RF map) scenario (a second scenario) shown in FIG. 1E, a hierarchical transmission effect may be achieved through interaction. A network device 173 transmits large-range coarse-grained data 175 to a terminal device 171, and then transmits small-range fine-grained data 185 based on sensing measurement 176 and a feedback 180 of the terminal device. In this way, an amount of data to be transmitted can be greatly reduced. The coarse-grained data 175 and the fine-grained data 185 in this scenario have spatial correlation. In FIG. 1D and FIG. 1E, the terminal device 161 and the terminal device 171 may be implementations of the terminal device 101 in FIG. 1A, and the network device 163 and the network device 173 may be implementations of the network device 103 in FIG. 1A. In addition to the spatial granularity of the point cloud data and the radio frequency map data in FIG. 1E, the channel data in FIG. 1D may also have a frequency domain granularity. For example, the first channel data 150 is frequency-domain coarse-grained data, and the second channel data 160 is frequency-domain fine-grained data. The terminal device 141 generates the frequency-domain fine-grained second channel data 160 based on feedback interaction (not shown in FIG. 1D). A person of ordinary skill in the art may understand that there may be another granularity resolution manner, for example, a time domain granularity. This is not limited in embodiments of this disclosure.

In this embodiment of this disclosure, there is correlation between the first channel data 150 and the second channel data 160, and there is correlation between the coarse-grained data 175 and the fine-grained data 185. Therefore, at least a part of the first channel data 150 or the coarse-grained data 175 may be selected as a reference for compressing the second channel data 160 or the fine-grained data 185. A first granularity of the coarse-grained data 175 is greater than a second granularity of the fine-grained data 185. In this embodiment of this disclosure, the foregoing data may be in a matrix form. The first channel data 150 and the coarse-grained data 175 may be collectively referred to as a first data matrix, and the second channel data 160 and the fine-grained data 185 may be collectively referred to as a second data matrix. A person of ordinary skill in the art may understand that the foregoing data may alternatively be in a vector form, and a vector is a specific form of a matrix.

FIG. 2 is a flowchart of data compression and decompression according to an embodiment of this application, and specifically describes how to perform efficient data compression and decompression in a scenario in which data such as native air interface data is transmitted a plurality of times.

In a procedure 200, a data compression apparatus 201 sends (204) a first data matrix 205. The data compression apparatus 201 sends (208) a projection result and a projection residual 210 of a second data matrix. The projection result is determined based on a projection matrix derived from the second data matrix and the first data matrix, and the projection residual is determined based on the second data matrix and the projection result. A data decompression apparatus 203 receives the first data matrix 205, and the projection result and the projection residual 210 of the second data matrix. The data decompression apparatus 203 obtains, based on the first data matrix, the projection result, and the projection residual in 215, the second data matrix or an approximate matrix of the second data matrix. In this way, correlation between the first data matrix and the second data matrix can be fully utilized, to improve compression efficiency, and save transmission bandwidth or storage resources. The data compression apparatus 201 may correspond to the terminal device 101 in FIG. 1A, and the data compression apparatus 203 may correspond to the network device 103 in FIG. 1A. Alternatively, the data compression apparatus 201 may correspond to the network device 103 in FIG. 1A, and the data compression apparatus 203 may correspond to the terminal device 101 in FIG. 1A.

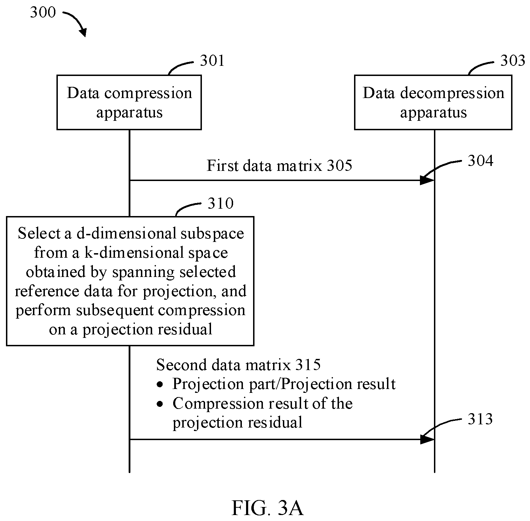

FIG. 3A is a flowchart of transmitting a first data matrix and a second data matrix according to an embodiment of this application. A data compression apparatus 301 and a data decompression apparatus 303 in FIG. 3A may respectively be implementations of the data compression apparatus 201 and the data decompression apparatus 203 in FIG. 2.

In a procedure 300, the data compression apparatus 301 sends (304) a first data matrix 305 to the data decompression apparatus 303. In 310, the data compression apparatus 301 selects a d-dimensional subspace from a k-dimensional space obtained by spanning selected reference data or a reference matrix, projects a second data matrix onto the d-dimensional subspace, and performs subsequent compression on a projection residual. The reference matrix is a submatrix of the first data matrix 305. The submatrix may be a part or all of the first data matrix 305. The data compression apparatus 301 sends (313) the second data matrix to the data decompression apparatus 303, and specifically, may send a projection part or a projection result, and a compression result of the projection residual. The data compression apparatus 301 may also send a compression result of the projection part or a compression result of the projection result. The compression result of the projection part and the compression result of the projection residual may be further quantized. In this way, second data can be efficiently compressed by using correlation between the second data and first data, to reduce transmission bandwidth or storage spaces.

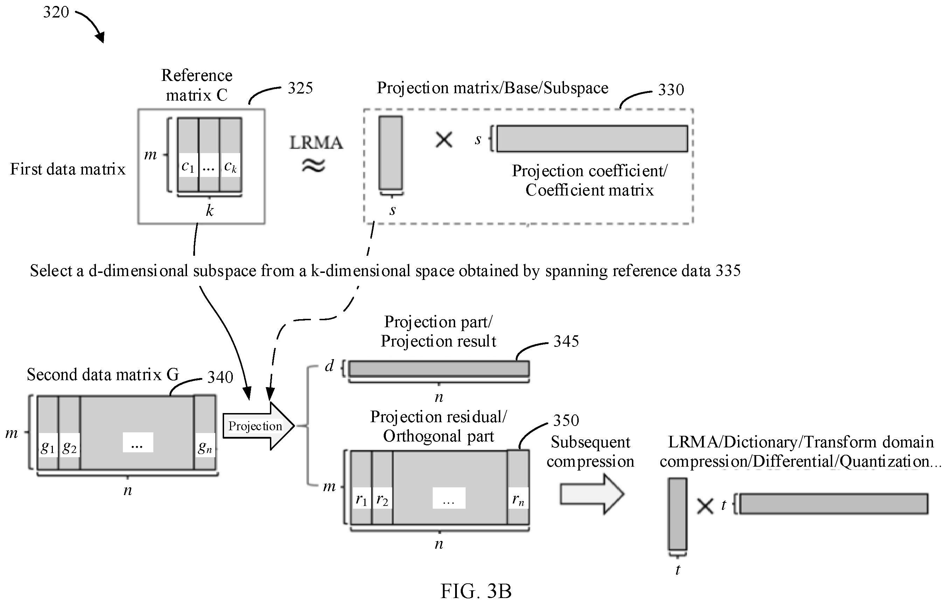

FIG. 3B is a diagram of transmitting a first data matrix and a second data matrix according to an embodiment of this application. In an embodiment 320, for example, a data compression apparatus performs LRMA decomposition of matrix decomposition on a reference matrix C 325 (m rows and k columns) in the first data matrix, to obtain a product 330 of a projection matrix (s columns) and a projection coefficient (s rows). The projection matrix may represent a base (Base) or a subspace, and the projection matrix may be a coefficient matrix. In 335, the data compression apparatus selects a d-dimensional subspace from a k-dimensional space obtained by spanning reference data as a projection matrix (d columns) of the second data matrix G. The d-dimensional subspace may be obtained by selecting d columns from the k columns of the reference matrix C, or selecting d columns from the s columns of the projection matrix. The data compression apparatus projects the second data matrix G with m rows and n columns onto the selected d-dimensional subspace or the projection matrix with the d columns, to obtain a projection part or a projection result 345 with d rows and n columns, and a projection residual or an orthogonal part 350. The data compression apparatus performs subsequent compression on the projection residual or the orthogonal part 350, for example, by using an LRMA method, a dictionary compression method, a transform domain compression method, a differential method, or a quantization method, to obtain a compression result. The data compression apparatus may also compress the projection part or the projection result 345 in a manner like quantization or entropy encoding, to obtain a compression result. The d-dimensional subspace is selected based on the correlation between the first data matrix and the second data matrix, and the second data matrix is projected, so that the second data matrix G 340 may be represented by using the projection result and the projection result with a small error. A person of ordinary skill in the art may understand that, in addition to matrix decomposition, another manner like dictionary learning may also be used to obtain the projection matrix. This is not limited in this disclosure.

In embodiments of this disclosure, the second data matrix, for example, the fine-grained data, is projected onto the space obtained by spanning the first data matrix, for example, the coarse-grained data, to assist in compression, and a projection operation is performed on the space obtained by spanning the reference matrix. The second data matrix may be projected and decomposed when a projection matrix is given, and the projection matrix is selected in a proper manner, or the projection matrix is constructed in an optimal subspace of the space obtained by spanning the reference matrix for projection. In this way, the second data matrix can be compressed by using the correlation between the first data matrix and the second data matrix, to reduce the compression error. In embodiments of this disclosure, the coarse-grained data (corresponding to the first data matrix) may be retrieved in two manners: based on a spatial location or based on clustering, and the fine-grained data is compressed in a feedback interaction manner. A retrieval result or confidence of the coarse-grained data may be fed back. In this way, the fine-grained data is accurately compressed by using the correlation between the coarse-grained data and the fine-grained data (corresponding to the second data matrix), to reduce the compression error. The data compression apparatus and the data decompression apparatus may further exchange a correspondence between the coarse-grained data and the fine-grained data, and refer to an indication of the coarse-grained data, to implement synchronization between the data compression apparatus and the data decompression apparatus, thereby facilitating accurate decompression.

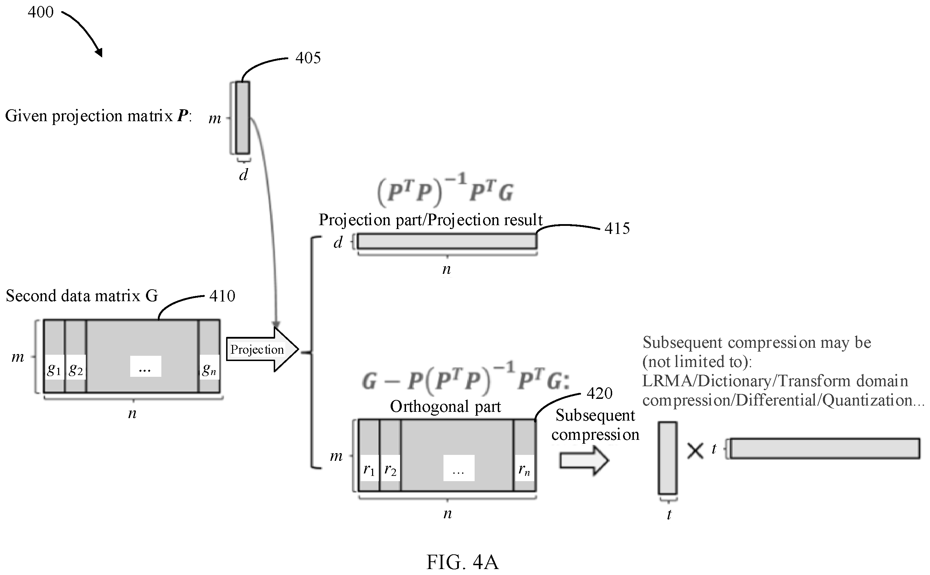

FIG. 4A is a diagram of performing projection compression on a given projection matrix according to an embodiment of this application. Specifically, in an embodiment 400, a second data matrix G is projected when a projection matrix P is given. At least a part of a reference matrix or a basis of the reference matrix forms the projection matrix P 405 (dimension m*d), and a column space of the projection matrix forms a projection space. A second data matrix G 410 to be compressed is projected and decomposed by using the projection matrix P, to obtain a projection part or a result part 415 (*P^{T}*P)⁻¹*P^{T}G*. An orthogonal part 420 G - (*P^{T}*P)⁻¹*P^{T}G* is obtained based on the second data matrix G 410 and the projection part or the result part 415. Subsequent compression is performed on the orthogonal part to obtain a compression result. The subsequent compression may be any one of the following: LRMA decomposition, dictionary compression, transform domain compression, differential calculation, and quantization, or may be another compression manner. This is not limited in embodiments of this disclosure. Alternatively, the projection part or the result part may be compressed to obtain the compression result. In this embodiment, the first data matrix or the reference matrix may be coarse-grained, and the second data matrix G 410 may be fine-grained.

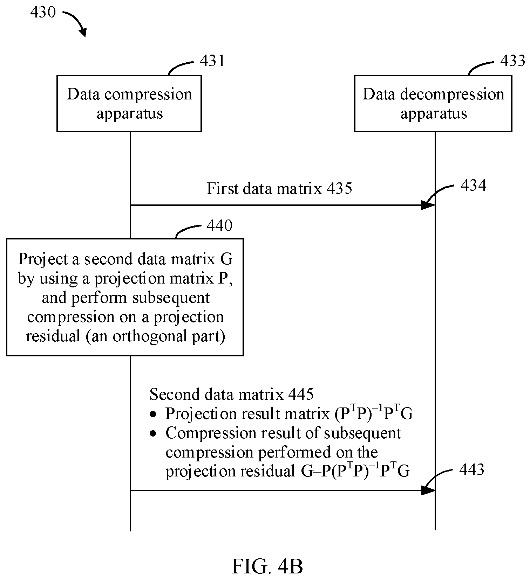

FIG. 4B is a flowchart of performing projection compression on a given projection matrix according to an embodiment of this application, and corresponds to FIG. 4A. A data compression apparatus 431 and a data decompression apparatus 433 may respectively be specific implementations of the data compression apparatus 201 and the data decompression apparatus 203 in FIG. 2. In an embodiment 430, the data compression apparatus 431 sends (434) a first data matrix 435 to the data decompression apparatus 433. In 440, the data compression apparatus 431 projects a second data matrix by using a projection matrix P, and performs subsequent compression on a projection residual (an orthogonal part). The data compression apparatus 431 sends (443) the second data matrix 445 to the data decompression apparatus 433. Specifically, a projection result matrix (*P^{T}*P)⁻¹*P^{T}G* and a compression result of subsequent compression performed on the projection residual G - (*P^{T}*P)⁻¹*P^{T}G* may be sent. The data compression apparatus 431 may also send a compression result of the projection result matrix to the data decompression apparatus 433.

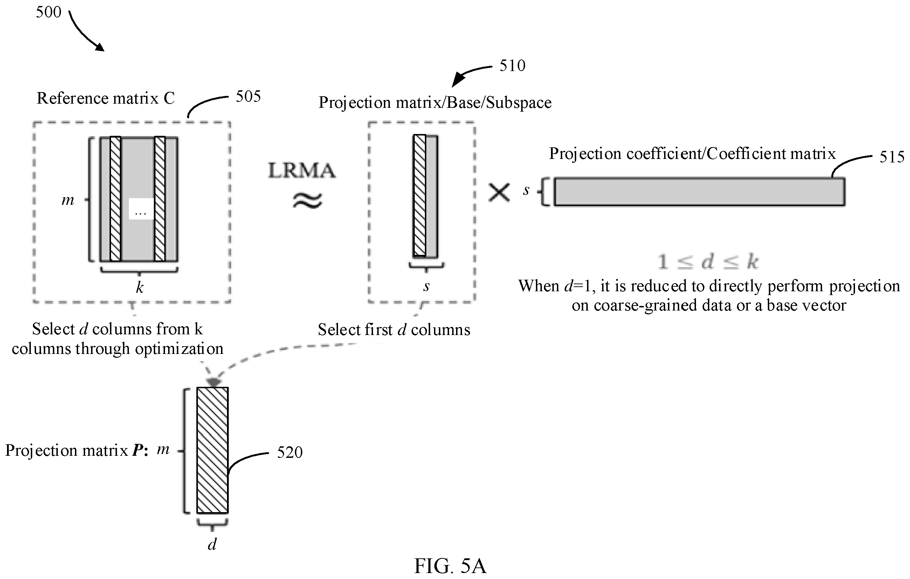

FIG. 5A is a diagram of generating a projection matrix through column selection or LRMA decomposition according to an embodiment of this application. Specifically, an embodiment 500 may be a specific manner of generating the projection matrix P in FIG. 4A.

In this embodiment of this disclosure, a projection matrix P 520 may be selected from d columns in a reference matrix C 505 with m rows and k columns. The reference matrix C is a first data matrix or a submatrix of the first data matrix. A selection manner may be solving a combinatorial optimization problem. When k is not large, k columns may be traversed and searched, or the d columns may be selected from the k columns through heuristic search. The projection matrix P 520 may alternatively be selected from d columns of a projection basis 510 (m*s matrix) used when LRMA decomposition is performed on the reference data matrix C. For example, after SVD decomposition is performed on the reference matrix, d columns corresponding to d largest singular values in SVD may be directly selected. In this way, the projection matrix P may be flexibly obtained in two different manners. A manner of directly selecting the d columns from the reference matrix has a small calculation amount, and a manner of performing SVD decomposition on the reference matrix can reduce the projection error.

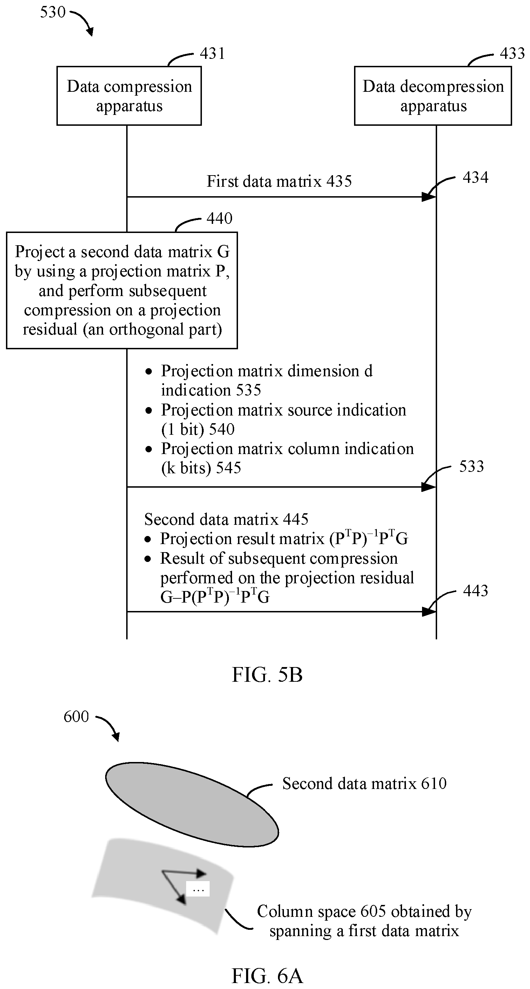

FIG. 5B is a flowchart of generating a projection matrix through column selection or LRMA decomposition to perform data compression according to an embodiment of this application, and corresponds to the projection matrix generation method shown in FIG. 5A. Compared with the data compression apparatus in FIG. 4B, in an embodiment 530 in FIG. 5B, the data compression apparatus 431 further sends, to the data decompression apparatus 433, first indication information, namely, a projection matrix dimension d indication 535, second indication information, namely, a projection matrix source indication (1 bit) 540, and third indication information, namely, a projection matrix column indication (k bits) 545. A quantity of columns or the dimension d of the projection matrix is a parameter related to a compression rate (data amount), and may be dynamically indicated. In actual use, the data compression apparatus 431 and the data decompression apparatus 433 may configure some possible values in advance. For example, all possible values of d are 1, 2, 3, 4, 5, 6, 7, and 8, and then one of the values is dynamically selected or indicated by using several bits. For example, the possible value eight of d needs to be indicated by using three bits. The data compression apparatus 431 may further send the projection matrix source indication (1 bit) 540 to the data decompression apparatus 433, to indicate whether the projection matrix P is from the reference matrix or the basis that is obtained after LRMA decomposition is performed on the reference matrix. The projection matrix source indication 540 may perform dynamic indication in each transmission, or may semi-statically perform indication and selection once at an interval of a period of time. When the projection matrix P is directly from the reference matrix, a projection matrix column indication 545 indicates d columns that are selected from the k columns of the reference matrix as the projection matrix P, and the selected d columns may be identified by using a bitmap (bitmap) with a length of k bits. In this case, 1 ≤ *d* ≤ k. When the projection matrix P is from the basis that is obtained after LRMA decomposition is performed on the reference matrix, the projection matrix column indication 545 indicates a quantity of columns of the projection matrix P. In this case, 1 ≤ *d* ≤ s. In this embodiment of this disclosure, the data compression apparatus 431 and the data decompression apparatus 433 may also be fixedly configured to select one of the d columns of the reference matrix and the d columns of the basis obtained after LRMA decomposition is performed on the reference matrix to compress and decompress the second data matrix. In this way, the second data matrix may be compressed and decompressed by using the correlation between the first data matrix and the second data matrix and flexibly selecting a compression manner. The indication information implements synchronization between the data compression apparatus and the data decompression apparatus, to facilitate accurate data compression and decompression. In this embodiment of this disclosure, the first data matrix or the reference matrix C 505 may be coarse-grained, and the second data matrix may be fine-grained.

FIG. 6A is a diagram of subspace projection according to an embodiment of this application. In an embodiment 600, a data compression apparatus may select, from a column space 605 obtained by spanning a first data matrix, a d-dimensional subspace with optimal performance to project a second data matrix 610, where the selection of the d-dimensional subspace is related to the second data matrix 610, to reduce the projection error and further reduce the compression error.

In this embodiment of this disclosure, a reference matrix C (m*k-dimensional) referenced by a to-be-compressed second data matrix G (m*n-dimensional) is a first data matrix or a submatrix of a first data matrix. A d-dimensional subspace of the reference matrix C is selected, and a projection matrix is obtained. A selection criterion is to minimize a Frobenius (Frobenius) norm of an orthogonal part after projection, that is, a projection error of the second data matrix G in the subspace approaches a minimum value. An optimization problem may be solved. Specific steps are as follows:

The data compression apparatus first selects an optimal subspace: ${S}^{∗} = {argmin}_{\begin{matrix}P = C \times S \\ S ∈ {ℝ}^{k \times d}\end{matrix}} {\left‖G-P{\left({P}^{T}P\right)}^{- 1}{P}^{T}G\right‖}_{F}^{2}$

Herein, *R^{k×d}* is a real space of a k*d-dimensional matrix, and is a floating-point number. *P^{T}* is a transpose of a matrix P, $∥ {∥}_{F}^{2}$ is a Frobenius norm operation, and argmin is minimum value optimization.

By using a subspace selection matrix *S** in the previous step, an optimal projection subspace, namely, the projection matrix, is obtained: ${P}^{∗} = C \times {S}^{∗}$

The second data matrix G is projected and decomposed in the optimal projection subspace, and is decomposed into the following two parts:
a projection part: (*P*^{T}P**)⁻¹*P*^{T}G*; and
an orthogonal part: *G - P*(*P*^{T}P**)⁻¹*P*^{T}G.*

Finally, the orthogonal part of the projection is compressed in a manner such as LRMA compression, dictionary compression, or transform domain compression. The projection part may also be compressed in a manner such as quantization or entropy encoding.

In this embodiment of this disclosure, the optimal subspace S* is optimized for the second data matrix G, so that a projection error of G in the subspace is minimized. When a new second data matrix G' appears, S* may be recalculated, so that an optimal base is obtained each time.

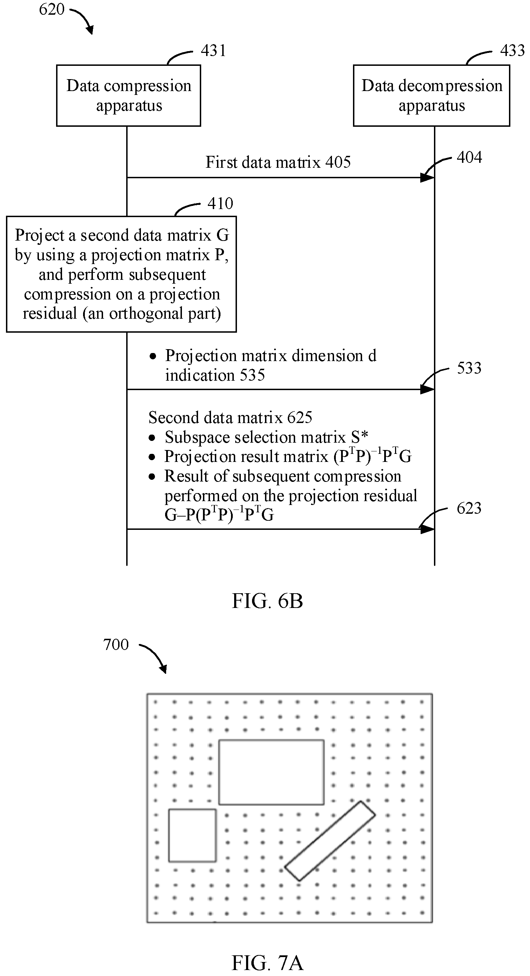

In this embodiment of this disclosure, for the second data matrix, data that needs to be transmitted includes three parts: the subspace selection matrix S*, a subspace projection part of the second data matrix, and a subsequent compression result of a projection residual of the second data matrix. FIG. 6B is a flowchart of generating a projection matrix through subspace projection to perform data compression according to an embodiment of this application, and corresponds to FIG. 6A and the foregoing embodiment in which the subspace selection matrix S* is obtained and the projection matrix is obtained. Compared with sending the second data matrix in FIG. 5B, sending (623) a second data matrix 625 includes an additional subspace selection matrix S*. In this embodiment of this disclosure, when sending the subspace selection matrix S*, the data compression apparatus 431 may not send the projection matrix source indication (1 bit) 540 and the projection matrix column indication (k bits) 545. The base feature of the projection subspace has been completely described by using the subspace selection matrix S*, and a source of the projection matrix and a column location of the projection matrix may no longer be indicated.

In this embodiment of this disclosure, the second data matrix G may be a fine-grained matrix, and the first data matrix and the reference matrix may be coarse-grained matrices.

In this embodiment of this disclosure, a specific method for solving the foregoing optimization problem is described below. An optimal subspace selection problem aims to select a d-dimensional subspace from a k-dimensional column space obtained by spanning the reference data matrix C, so that a residual obtained after the second data matrix G is projected onto the d-dimensional subspace is minimized, that is, ${S}^{∗} = {argmin}_{\begin{matrix}P = C \times S \\ S ∈ {ℝ}^{k \times d}\end{matrix}} {\left‖G-P{\left({P}^{T}P\right)}^{- 1}{P}^{T}G\right‖}_{F}^{2}$

This problem has a closed-form solution. Detailed solution steps are as follows:

First, perform QR decomposition on the reference matrix C:
$C = Q \times R ,$ where $Q ∈ {ℝ}^{m \times k}$ with orthogonal columns, $R ∈ {ℝ}^{k \times k}$, Q is a real matrix with m rows and k columns, and R is a real matrix with k rows and k columns.

Substitute *C* = *QR* into *P* = *CS* to obtain *P* = *QRS*. *RS* may be denoted as *Ŝ*, and the original problem is equivalent to the following optimization problem: ${\hat{S}}^{∗} = {argmin}_{\hat{S} ∈ {ℝ}^{k \times d}} {\left‖\left({Q}^{T}G\right)-\hat{S}{\left({\hat{S}}^{T}\hat{S}\right)}^{- 1}{\hat{S}}^{T}\left({Q}^{T}G\right)\right‖}_{F}^{2}$

This expression is equivalent to finding the optimal d-dimensional projection subspace for ${Q}^{T} G ∈ {ℝ}^{k \times n}$. Perform SVD decomposition on the matrix *Q^{T}G* to obtain: ${Q}^{T} G = {UΣV}^{T}$

The optimal *Ŝ** is equal to the first d columns of the matrix *U*. Therefore, the optimal solution to the original problem is *S** = *R*⁻¹*Ŝ**, and the projection matrix is further obtained as: ${P}^{∗} = C \times {S}^{∗}$

To sum up, the overall solution process is to perform projection and then perform SVD decomposition to obtain the optimal subspace. In this way, the optimal projection subspace related to the second data matrix may be obtained in the closed-form solution manner, thereby reducing the projection error of the second data matrix, and further reducing the compression error.

In this embodiment of this disclosure, the first data matrix, the reference matrix, and the second data matrix may have different granularities, for example, have different spatial resolutions in a radio frequency map scenario.

FIG. 7A is a diagram of a radio frequency map (RF map) according to an embodiment of this application. A radio frequency map is a type of native air interface data related to a geographical location information, may describe an electromagnetic propagation feature in an environment, and may be used to assist in communication and positioning. As shown in an embodiment 700, radio frequency map data divides a space into small grids based on a specific resolution, and each grid is represented by a location point, which is usually a center point of the grid. The radio frequency map data may record electromagnetic propagation environment information at the representative location, for example, multipath information (such as an angle, a delay, and power), scaler information (such as a capacity and channel quality information CQI), whether electromagnetic propagation between the representative location and some base stations is along a line of sight (Line of Sight, LOS) path or a non-line of sight (Non-Line of Sight, NLOS) path, a deterministic matrix H, and coordinates of the geographical location represented by the grid. The radio frequency map data may be a summary of the foregoing information at the grid point location, or a part of the foregoing information, and describes electromagnetic propagation features of the entire area. Similar information may also be used in a point cloud data scenario.

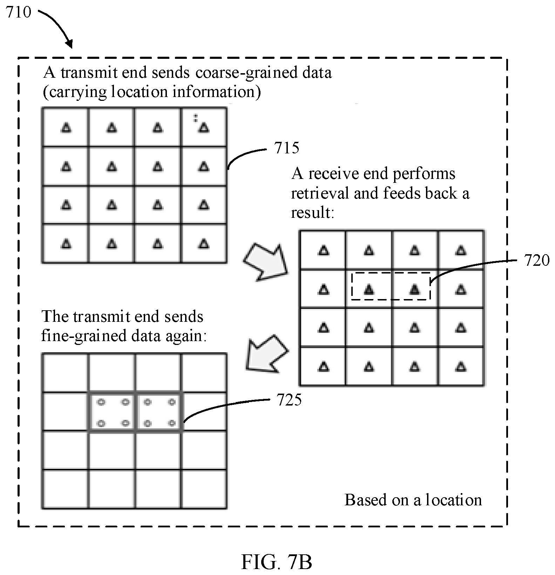

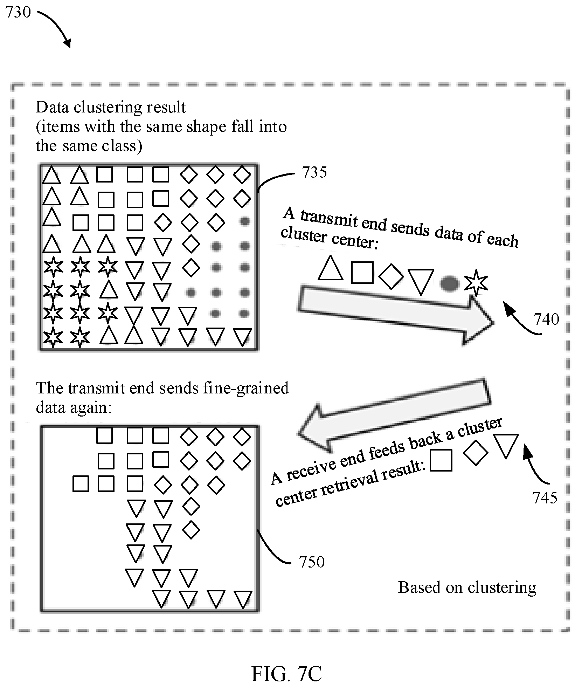

In this embodiment of this disclosure, for example, for the scenario shown in FIG. 1E, the coarse-grained data and the fine-grained data may be divided and retrieved in two manners: a location-based manner and a clustering-based manner. FIG. 7B illustrates the location-based manner, and FIG. 7C illustrates the clustering-based manner. In an embodiment 710 in FIG. 7B, coarse-grained data 715 sent by a data compression apparatus is data obtained by performing low-resolution spatial sampling on raw data, and corresponds to a first data matrix. Fine-grained data 725 (corresponding to a second data matrix) sent by the data compression apparatus is obtained based on a feedback result 720 that is fed back by a data decompression apparatus and that is of spatial location retrieval performed on the coarse-grained data 715. A first granularity of the coarse-grained data 715 is greater than a second granularity of the fine-grained data 725. The data decompression apparatus may feed back an index of a subset 720 of the received coarse-grained data 715, or may use a bitmap (bitmap) to indicate the subset 720. Either the index manner or the bitmap manner may be selected, and a preconfiguration manner may be used. The data compression apparatus may obtain, through retrieving based on the index of the subset 720 of the coarse-grained data that is fed back, for example, a location index in FIG. 7B, the fine-grained data 725 to be sent in the next step. In this way, correlation between the fine-grained data 725 and the coarse-grained data 715 may be established in the location index manner or the bitmap manner, to fully utilize spatial correlation between the two types of data, compress data for an area of interest, improve compression efficiency, and reduce data transmission resources or a data storage space. In this embodiment of this disclosure, the coarse-grained data 715 and the fine-grained data 725 may be in a vector form or a matrix form, and a vector is a special form of a matrix.

In this embodiment of this disclosure, the data decompression apparatus may also feed back confidence of the coarse-grained data 715. For example, the data decompression apparatus may divide the confidence into several levels, and then feed back a level of confidence of each piece of coarse-grained data 715. In this case, the data compression apparatus determines, based on the fed-back confidence, coarse-grained data 715 that is to be retrieved, to obtain the fine-grained data 725 to be subsequently sent. The location-based manner or the confidence-based manner may be applied to the radio frequency map data scenario or the point cloud data scenario. Compared with subset retrieval, confidence may be used for more accurate feedback.

In an embodiment 730 in FIG. 7C, a data compression apparatus performs clustering on raw data 735, uses obtained coarse-grained data 740 (corresponding to a first data matrix) as a cluster center of the raw data 735, and sends the coarse-grained data 740 to a data decompression apparatus. Points of different shapes in 735 represent raw data in different classes. For example, points in shapes of an equilateral triangle, a square, a rhombus, and the like represent the raw data in different classes. In the embodiment 730, the coarse-grained data 740 includes six cluster center points. A data decompression apparatus obtains three cluster center points 745 of interest from the coarse-grained data 740 through retrieving, and feeds back the three cluster center points to the data compression apparatus. In the data compression apparatus, fine-grained data 750 (corresponding to a second data matrix) is obtained based on a coarse-grained data retrieval result 745 fed back by the data decompression apparatus. A first granularity of the coarse-grained data 740 is greater than a second granularity of the fine-grained data 750. This clustering manner may be applied to the radio frequency map data scenario or the point cloud scenario. In this embodiment of this disclosure, in a scenario similar to the scenario in FIG. 7B, the data decompression apparatus may also feed back the confidence of the coarse-grained data 735. Details are not described in this disclosure again. In the clustering manner, data transmission resources or a data storage space of coarse-grained data can be reduced. However, the fine-grained data is generated based on the clustering feedback, so that spatial correlation between the coarse-grained data and the fine-grained data can be fully utilized, and data compression can be performed for an area of interest, to improve compression efficiency, and reduce data transmission resources or a data storage space. In this embodiment of this disclosure, the coarse-grained data 740 and the fine-grained data 750 may be in a vector form or a matrix form, and a vector is a special form of a matrix.

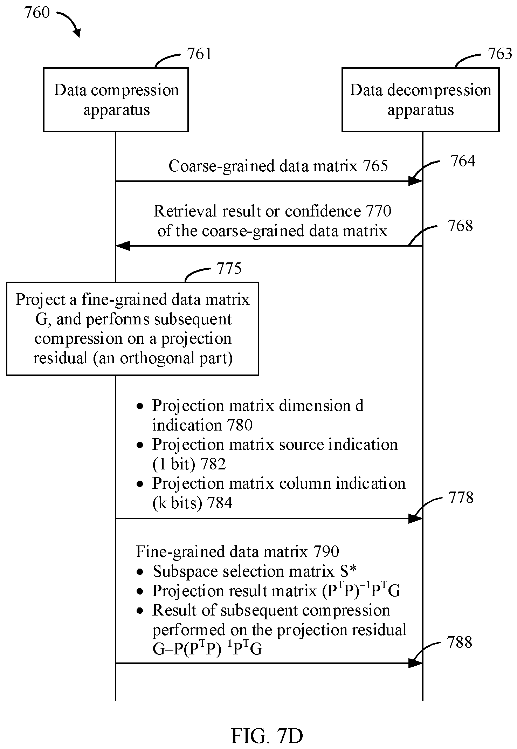

FIG. 7D is a flowchart of data compression based on retrieval according to an embodiment of this application. A procedure 760 in FIG. 7D corresponds to the embodiments in FIG. 7A, FIG. 7B, and FIG. 7C, and specifically shows signaling used in the foregoing embodiments. A data compression apparatus 761 and a data decompression apparatus 763 may respectively be specific implementations of the data compression apparatus 201 and the data decompression apparatus 203.

In a procedure 760, the data compression apparatus 761 sends (764) a coarse-grained data matrix 765 to the data decompression apparatus 763. The data decompression apparatus 763 analyzes and retrieves the coarse-grained data matrix 765, and feeds back (768) a retrieval result or confidence 770 of the coarse-grained data matrix. In 775, the data compression apparatus 761 projects a fine-grained data matrix G, and performs subsequent compression on a projection residual (an orthogonal part). The data compression apparatus 761 sends (778) a projection matrix dimension d indication 780, a projection matrix source indication (1 bit) 782, and a projection matrix column indication (k bits) 784 to the data decompression apparatus 763, to configure the data decompression apparatus 763, so as to implement synchronization between data compression and decompression. The data compression apparatus 761 sends (788) the fine-grained data matrix 790 to the data decompression apparatus 763. The fine-grained data matrix 790 may include a subspace selection matrix S*, a projection result matrix (*P***^{T}P**)⁻¹*P***^{T}G*, and a compression result of subsequent compression performed on the projection residual *G* - *P*(*P^{T}P**)⁻¹*P^{T}G*. The fine-grained data matrix 790 may further include a result of compressing the projection result matrix (*P***^{T}P**)⁻¹*P***^{T}G*. In this way, a complete data transmission and signaling transmission mechanism can be established between the data compression apparatus 761 and the data decompression apparatus 763, and data compression and decompression are performed by using correlation between coarse-grained data and fine-grained data, to improve compression efficiency and reduce data transmission resources or a data storage space.

A person of ordinary skill in the art may understand that, in addition to the coarse-grained data and the fine-grained data that have different spatial resolutions and that are used in the radio frequency map scenario or the point cloud scenario shown in the embodiments in FIG. 7A to FIG. 7C, the coarse-grained data and the fine-grained data may also be used in a scenario such as a frequency domain resolution of channel data in FIG. 1D or another time domain resolution. This is not limited in this embodiment of this disclosure.

An embodiment of this disclosure further discloses that fine-grained data is compressed by using a correspondence between fine-grained data and coarse-grained data, and that the fine-grained data is compressed by referring to an indication of the coarse-grained data, for example, for the scenarios shown in FIG. 1E, FIG. 7A, FIG. 7B, and FIG. 7C.

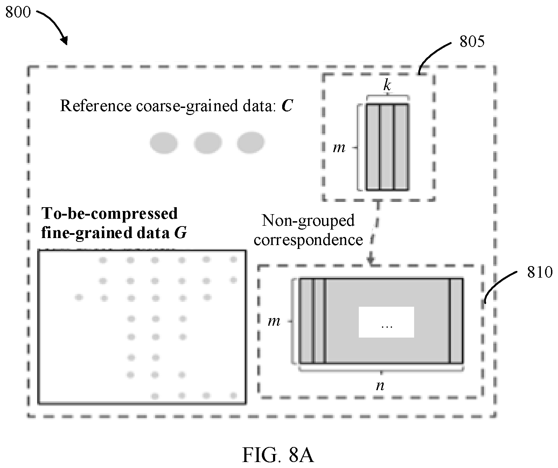

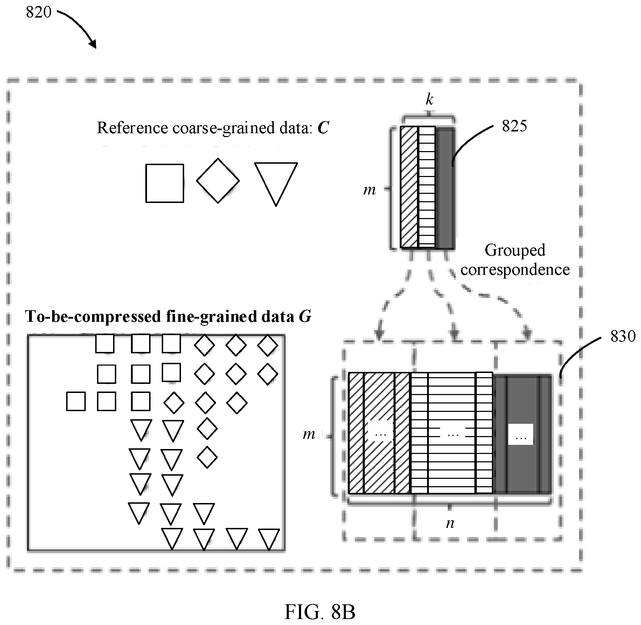

There may be two correspondences between fine-grained data and coarse-grained data: The fine-grained data is compressed without grouping, and the fine-grained data is compressed by grouping, which are respectively shown in FIG. 8A and FIG. 8B.

FIG. 8A is a diagram of non-grouped data compression according to an embodiment of this application.

In an embodiment 800, neither reference coarse-grained data C 805 nor to-be-compressed fine-grained data G 810 is grouped. During compression, all fine-grained data G 810 is compressed together, and a compression process corresponds to or refers to a same group of coarse-grained data, namely, the overall reference coarse-grained data 805. There may be two different manners of using the reference coarse-grained data 805. The current reference coarse-grained data may be all coarse-grained data fed back by the data decompression apparatus, or may be a subset of coarse-grained data sent by the data compression apparatus in a previous round. When a subset of coarse-grained data is used, the subset may be indicated, for example, by using a subscript index or a bitmap (bitmap). In this way, the fine-grained data may be compressed by referring to all coarse-grained data or a subset of coarse-grained data, so that the coarse-grained data is fully utilized, and a compression effect is improved.

FIG. 8B is a diagram of grouped data compression according to an embodiment of this application.

In an embodiment 820, the data compression apparatus groups fine-grained data 830, for example, into three groups in FIG. 8B. Each group of fine-grained data corresponds to one group in coarse-grained data 825. Specifically, the fine-grained data 830 currently sent by the data compression apparatus may be divided into a plurality of groups, and each group refers to one piece of coarse-grained data fed back by a data decompression apparatus. For example, corresponding to the clustering embodiment in FIG. 7C, grouping may be performed based on clustering, and reference coarse-grained data of each group may be a cluster center of the group. For each group of data in the fine-grained data 830, refer to a subset of the coarse-grained data 825 sent in the previous round. In this embodiment of this disclosure, the subset may be indicated, for example, indicated by using a subscript index or a bitmap. In this way, compression of the fine-grained data may refer to a part of coarse-grained data that is most related to the fine-grained data, to reduce calculation complexity and improve compression efficiency.

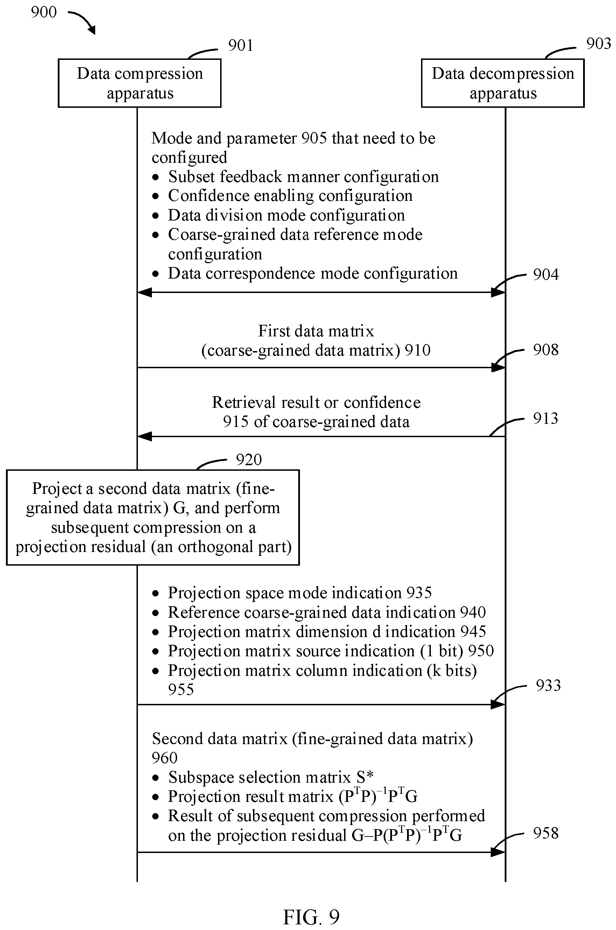

FIG. 9 is a flowchart of comprehensive signaling interaction according to an embodiment of this application. In FIG. 9, an embodiment 900 comprehensively summarizes the signaling used in the foregoing embodiments. A data compression apparatus 901 and a data decompression apparatus 903 may be specific implementations of the data compression apparatus 201 and the data decompression apparatus 203.

A first data matrix (coarse-grained data matrix) 910, a block 920, and a second data matrix (fine-grained data matrix) 960 in FIG. 9 respectively correspond to the first data matrix 405, a block 410, and the second data matrix 625 in FIG. 6B, and the coarse-grained data matrix 765, the confidence 770, a block 775, and the fine-grained data matrix 790 in FIG. 7D. A retrieval result or confidence 910 of coarse-grained data in FIG. 9 correspond to the retrieval result of the coarse-grained data matrix in FIG. 7D. Details are not described in this disclosure again.

In the procedure 900, sixth configuration information or a projection space mode indication 935 is used to select one of the following two manners to perform projection: performing projection by using a column space of a reference matrix (reference coarse-grained data), or performing projection by using an optimal subspace of a column space of a reference matrix (reference coarse-grained data). Seventh configuration information identifies a reference matrix from the first data matrix.

Mode and parameter 905 that need to be configured and that are sent (904) by the data decompression apparatus 903 to the data compression apparatus 901 include first configuration information, second configuration information, third configuration information, fourth configuration information, and fifth configuration information. The mode and parameter 905 that need to be configured may alternatively be sent (904) by the data compression apparatus 901 to the data decompression apparatus 903, so that the data compression apparatus 901 synchronizes with the data decompression apparatus 903.

Configuration signaling related to data division and retrieval may include the first configuration information, the second configuration information, and the third configuration information. The first configuration information or subset feedback manner configuration information is used to identify whether a subscript index or a bitmap (bitmap) manner is used when the data decompression apparatus 903 feeds back a coarse-grained data subset. The second configuration information or confidence feedback enabling configuration information is used to identify that the data decompression apparatus 903 adds a feedback on confidence when feeding back the coarse-grained data subset. The third configuration information or data division mode configuration information is used to perform selection between two manners: a geographical location-based manner and a clustering-based manner.

The configuration signaling related to the data correspondence and the reference coarse-grained data indication may include the fourth configuration information and the fifth configuration information. The fourth configuration information or data correspondence mode configuration information is used to perform selection between two manners: grouped correspondence and non-grouped correspondence. The fifth configuration information or coarse-grained data reference mode configuration information is used to perform selection between the following two reference modes: The current fine-grained data (or a group of fine-grained data) is compressed by referring to coarse-grained data fed back by the data decompression apparatus 903; or the current fine-grained data (or a group of fine-grained data) is compressed by referring to all coarse-grained data sent by the data compression apparatus 901 in a previous round, or a subset of all coarse-grained data, instead of coarse-grained data fed back by the data decompression apparatus 903.

In this embodiment of this disclosure, the data compression apparatus 901 and the data decompression apparatus 903 can be well configured and synchronized by using the foregoing signaling, to facilitate accurate compression and decompression.

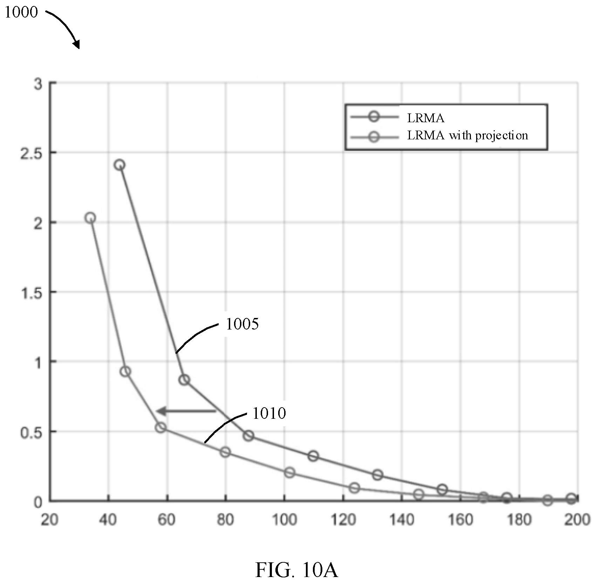

FIG. 10A is a diagram of a compression effect on radio frequency map data according to an embodiment of this application. An embodiment 1000 compares the distortion obtained using a conventional LRMA-based approach with that achieved using the projected LRMA approach according to this embodiment of this disclosure.

The simulation corresponding to the embodiment 1000 is based on radio frequency map data and uses a mode that generates both coarse-grained data and fine-grained data based on geographical locations, which corresponds to the scenario in FIG. 1E. For the coarse-grained data, radio frequency map data from four geographical locations with a down-sampled spatial resolution is used, with 10 paths per location. For the fine-grained data, radio frequency map data from 12 locations with the original spatial resolution is used, with 10 paths per location. A reference 1005 represents direct LRMA compression applied to the fine-grained data. In this embodiment of this disclosure, corresponding to 1010, all the coarse-grained data from the four locations is used as the reference coarse-grained data, the projection matrix is selected as the first d columns of the projection basis obtained by performing LRMA decomposition on the reference coarse-grained data, with d being dynamically optimized. Curves 1005 and 1010 are rate distortion (Rate Distortion, RD) curves for compressing an elevation angle. The horizontal axis is a quantity of floating-point numbers after compression, and the vertical axis is distortion. It can be learned from the embodiment 1000 that, for the same distortion level on the vertical axis, the embodiment 1010 of this disclosure achieves a smaller quantity of floating-point numbers after compression when compared with the reference 1005, demonstrating superior data compression effect.

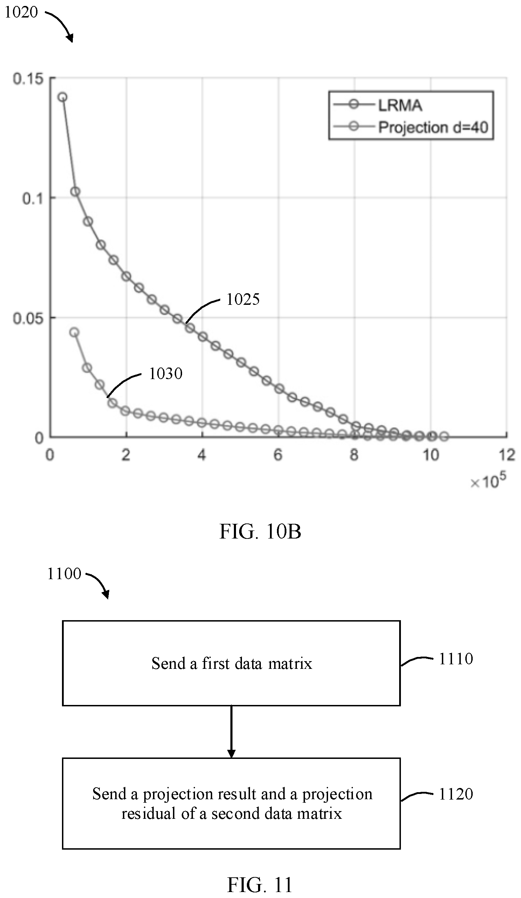

FIG. 10B is a diagram of a compression effect on a channel matrix according to an embodiment of this application. An embodiment 1020 compares the distortion obtained using a conventional LRMA-based approach with that achieved using the projected LRMA approach according to this embodiment of this disclosure.

The simulation corresponding to the embodiment 1020 is mainly for channel matrix data of a large-scale multiple-input multiple-output (Multiple Input Multiple Output, MIMO) antenna system, and corresponds to the scenario in FIG. 1D. In the simulation environment, there is a single user, data is fed back once every 20 transmission time intervals (Transmission Time Interval, TTI), and each TTI includes 14 orthogonal frequency division multiplexing (Orthogonal Frequency Division Multiplexing, OFDM) symbols. 64 resource blocks (Resource Blocks, RBs)*12 sub-carriers (Sub-carriers, SCs)=768 frequency points, where a sub-carrier spacing is 3 kHz. There are 32 receive antennas and 1024 transmit antennas. The reference 1025 corresponds to reconstructing data of a current TTI into a 32768*768 matrix, directly performing LRMA compression, and separately processing a real part and an imaginary part. In 1030 of this embodiment of this disclosure, data fed back last time, for example, data of 20 TTIs before, is used as a reference, and the projection matrix is selected from the first d columns of the projection basis obtained after LRMA decomposition is performed on the reference data, where d is fixed at 40. Curves 1025 and 1030 are rate distortion (Rate Distortion, RD) curves for compressing a channel transmission data H matrix. The horizontal axis is a quantity of floating-point numbers after compression, and the vertical axis is distortion. It can be learned from the embodiment 1020 that, for the same distortion level on the vertical axis, the embodiment 1030 of this disclosure achieves a smaller quantity of floating-point numbers after compression when compared with the reference 1025, demonstrating superior data compression effect.

It can be seen from FIG. 10A and FIG. 10B that the foregoing compression performed by using the correlation between the coarse-grained data and the fine-grained data, or the correlation between the first data matrix and the second data matrix achieves superior effect.

FIG. 11 is a flowchart of a data compression method according to an embodiment of this application. The method may be performed by the data compression apparatus 201. Unless otherwise specified, the data compression apparatus 201 in embodiments of this application may be the data compression apparatus (for example, implemented as a terminal device or a network device), or may be a component (for example, a processor, a chip, or a chip system) in the data compression apparatus, or may be a logical module or software that can implement all or some functions of the data compression apparatus. The following provides descriptions by using an example in which an execution body is the data compression apparatus 201. In a method 1100, in 1110, the data compression apparatus 201 sends a first data matrix. In 1120, the data compression apparatus 201 sends a projection result and a projection residual of a second data matrix. The projection result is determined based on a projection matrix derived from the second data matrix and the first data matrix, and the projection residual is determined based on the second data matrix and the projection result. In this way, correlation between the first data matrix and the second data matrix can be fully utilized, to improve compression efficiency, and save transmission bandwidth or storage resources.

In some implementations, the method further includes other operations performed by the data compression apparatus 201 in embodiments of this disclosure with reference to FIG. 2 to FIG. 10.

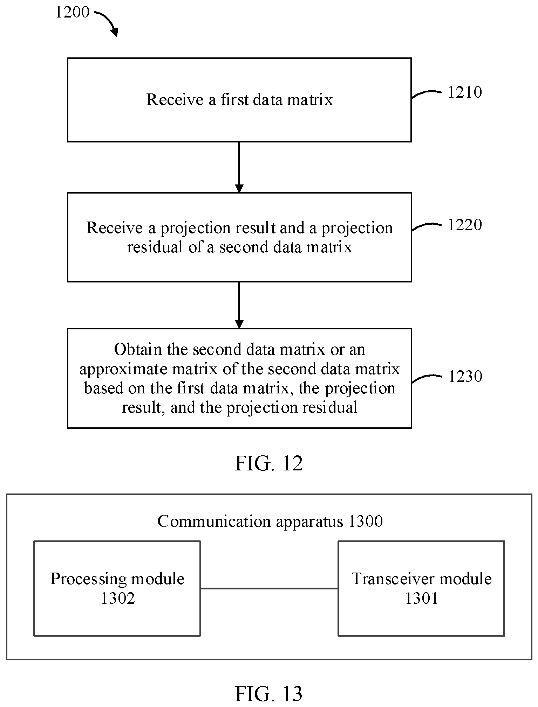

FIG. 12 is a flowchart of a data decompression method according to an embodiment of this application. The method may be performed by the data decompression apparatus 203. Unless otherwise specified, the data decompression apparatus 203 in embodiments of this application may be the data decompression apparatus (for example, implemented as a terminal device or a network device), or may be a component (for example, a processor, a chip, or a chip system) in the data decompression apparatus, or may be a logical module or software that can implement all or some functions of the data decompression apparatus. The following provides descriptions by using an example in which an execution body is the data decompression apparatus 203.

In a method 1200, in 1210, the data decompression apparatus 203 receives a first data matrix. In 1220, the data decompression apparatus 203 receives a projection result and a projection residual of a second data matrix. In 1230, the data decompression apparatus 203 obtains, based on the first data matrix, the projection result, and the projection residual, the second data matrix or an approximate matrix of the second data matrix. The projection result is determined based on a projection matrix derived from the second data matrix and the first data matrix, and the projection residual is determined based on the second data matrix and the projection result. In this way, data compressed by a data compression apparatus can be decompressed and restored, so that correlation between the first data matrix and the second data matrix is fully utilized, to improve compression efficiency, and save transmission bandwidth or storage resources.

In some implementations, the method further includes other operations performed by the data decompression apparatus 203 in embodiments of this disclosure with reference to FIG. 2 to FIG. 10.

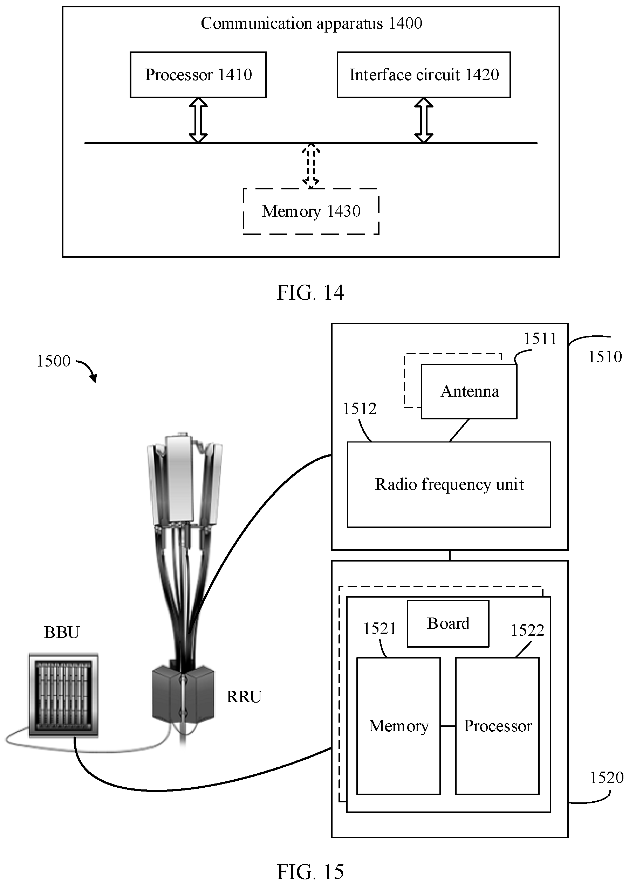

FIG. 13 and FIG. 14 are diagrams of structures of possible communication apparatuses according to embodiments of this application. The communication apparatuses may implement functions of the terminal device or the network device in the foregoing method embodiments. Therefore, the communication apparatuses can also implement beneficial effects of the foregoing method embodiments. In embodiments of this application, the communication apparatus may be the terminal device 101 shown in FIG. 1A, or may be the network device 103 shown in FIG. 1A, or may be a module (for example, a processor, a chip, or a chip system) used in the terminal device or the network device, or may be a logical module or software that can implement all or some functions of the terminal device or the network device. The terminal device or the network device may be implemented as a data compression apparatus or a data decompression apparatus.

As shown in FIG. 13, a communication apparatus 1300 includes a transceiver module 1301 and a processing module 1302. The communication apparatus 1300 may be configured to implement functions of the data compression apparatus or the data decompression apparatus in the method embodiments shown in FIG. 2, FIG. 11, and FIG. 12.

When the communication apparatus 1300 is configured to implement the functions of the data compression apparatus in the method embodiments shown in FIG. 2 and FIG. 11, the transceiver module 1301 is configured to: send a first data matrix, and send a projection result and a projection residual of a second data matrix. The processing module 1302 is configured to: determine the projection result based on a projection matrix derived from the second data matrix and the first data matrix, and determine the projection residual based on the second data matrix and the projection result.

When the communication apparatus 1300 is configured to implement the functions of the data decompression apparatus in the method embodiments shown in FIG. 2 and FIG. 12, the transceiver module 1301 is configured to: receive a first data matrix, and receive a projection result and a projection residual of a second data matrix. The processing module 1302 is configured to: obtain, based on the first data matrix, the projection result, and the projection residual, the second data matrix or an approximate matrix of the second data matrix. The projection result is determined based on a projection matrix derived from the second data matrix and the first data matrix, and the projection residual is determined based on the second data matrix and the projection result.

As shown in FIG. 14, a communication apparatus 1400 includes a processor 1410 and an interface circuit 1420. The processor 1410 and the interface circuit 1420 are coupled to each other. It can be understood that the interface circuit 1420 may be a transceiver or an input/output interface. Optionally, the communication apparatus 1400 may further include a memory 1430, configured to: store instructions to be executed by the processor 1410, store input data required for running instructions by the processor 1410, or store data generated after the processor 1410 runs instructions.

When the communication apparatus 1400 is configured to implement the methods in the foregoing method embodiments, the processor 1410 is configured to perform functions of the foregoing processing module 1302, and the interface circuit 1420 is configured to perform functions of the foregoing transceiver module 1301.

When the communication apparatus is the chip used in the terminal device, the chip in the terminal device implements the functions of the terminal device in the foregoing method embodiments. The chip in the terminal device receives information from another module (for example, a radio frequency module or an antenna) in the terminal device, where the information is sent by the network device to the terminal device. Alternatively, the chip in the terminal device sends information to another module (for example, a radio frequency module or an antenna) in the terminal device, where the information is sent by the terminal device to the network device.

When the communication apparatus is the chip used in the network device, the chip in the network device implements the functions of the network device in the foregoing method embodiments. The chip in the network device receives information from another module (for example, a radio frequency module or an antenna) in the network device, where the information is sent by the terminal device to the network device. Alternatively, the chip in the network device sends information to another module (for example, a radio frequency module or an antenna) in the network device, where the information is sent by the network device to the terminal device.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor or the like.

When the apparatus in embodiments of this application is the network device, the apparatus may be shown in FIG. 15. The apparatus may include one or more radio frequency units, for example, a remote radio unit (remote radio unit, RRU) 1510 and one or more baseband units (baseband units, BBUs) (which may also be referred to as digital units (digital units, DUs)) 1520. The RRU 1510 may be referred to as a transceiver module. The transceiver module may include a sending module and a receiving module, or the transceiver module may be a module that can implement sending and receiving functions. The transceiver module may correspond to the transceiver module 1301 shown in FIG. 13, that is, may perform an action performed by the transceiver module 1301. Optionally, the transceiver module may also be referred to as a transceiver machine, a transceiver circuit, a transceiver, or the like, and may include at least one antenna 1511 and a radio frequency unit 1512. The RRU 1510 is mainly configured to: receive and send a radio frequency signal, and perform conversion between a radio frequency signal and a baseband signal. The BBU 1510 is mainly configured to: perform baseband processing, control the base station, and the like. The RRU 1510 and the BBU 1520 may be physically disposed together, or may be physically disposed separately, namely, a distributed base station.

The BBU 1520 is a control center of the base station, may also be referred to as a processing module, may correspond to the processing module 1302 shown in FIG. 13, and is mainly configured to complete a baseband processing function, for example, channel coding, multiplexing, modulation, and spectrum spreading. In addition, the processing module may perform an action performed by the processing module 1302. For example, the BBU (processing module) may be configured to control the base station to perform operation procedures related to the network device in the foregoing method embodiments.

In an example, the BBU 1520 may include one or more boards, and a plurality of boards may jointly support a radio access network (for example, an LTE network) of a single access standard, or may separately support radio access networks (for example, an LTE network, a 5G network, or another network) of different access standards. The BBU 1520 further includes a memory 1521 and a processor 1522. The memory 1521 is configured to store necessary instructions and data. The processor 1522 is configured to control the base station to perform a necessary action, for example, configured to control the base station to perform the operation procedure related to the network device in the foregoing method embodiments. The memory 1521 and the processor 1522 may serve one or more boards. In other words, a memory and a processor may be disposed on each board. Alternatively, a plurality of boards may share a same memory and a same processor. In addition, a necessary circuit may further be disposed on each board.

An embodiment of this application provides a communication system. The communication system may include the data compression apparatus and the data decompression apparatus in the embodiment shown in FIG. 2, for example, the terminal device 101 or the network device 103. Optionally, the terminal device and the network device in the communication system may perform the communication method shown in any one of FIG. 2, FIG. 11, and FIG. 12.

An embodiment of this application further provides a circuit. The circuit may be coupled to a memory, and may be configured to perform a procedure related to the terminal device or the network device in any one of the foregoing method embodiments. A chip system may include a chip, and may further include another component such as a memory or a transceiver.

It should be understood that the processor mentioned in embodiments of this application may be a CPU, or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor, or the like.

It may be understood that the memory mentioned in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example rather than limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM).

It should be noted that when the processor is a general-purpose processor, a DSP, an ASIC, an FPGA or another programmable logic device, a discrete gate, a transistor logic device, or a discrete hardware component, the memory (a storage module) is integrated into the processor.

It should be noted that the memory described in this specification aims to include but is not limited to these memories and any memory of another proper type.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

It should be aware that, in combination with the examples described in embodiments disclosed in this specification, modules and algorithm steps can be implemented by electronic hardware or a combination of computer software and electronic hardware. Whether the functions are performed in a hardware or software manner depends on particular applications and design constraint conditions of the technical solutions. A person skilled in the art may use different methods to implement the described functions for each particular application, but it should not be considered that the implementation goes beyond the scope of this application.

It may be clearly understood that, for the purpose of convenient and brief description, for a detailed working process of the foregoing system, apparatus, and module, refer to a corresponding process in the foregoing method embodiments, and details are not described herein again.

In the several embodiments provided in this application, it should be understood that the disclosed communication method and apparatus may be implemented in another manner. For example, the described apparatus embodiment is an example. For example, the module division is logical function division and may be other division in actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The modules described as separate components may or may not be physically separate, and components displayed as modules may or may not be physical modules, that is, may be located in one place or may be distributed over a plurality of network units. Some or all of the units may be selected based on actual requirements to achieve the objectives of the solutions of embodiments.

In addition, functional modules in embodiments of this application may be integrated into one processing module, or each of the modules may exist alone physically, or two or more modules may be integrated into one module.

When the functions are implemented in the form of a software functional module and sold or used as an independent product, the functions may be stored in a computer-readable storage medium. Based on such an understanding, the technical solutions of embodiments of this application essentially, or the part contributing to the conventional technology, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The computer-readable storage medium may be any usable medium that can be accessed by a computer. The following provides an example but does not impose a limitation: The computer-readable medium may include a random access memory (random access memory, RAM), a read-only memory (read-only memory, ROM), an electrically erasable programmable read-only memory (electrically erasable programmable read-only memory, EEPROM), a compact disc read-only memory (compact disc read-only memory, CD-ROM), a universal serial bus flash disk (universal serial bus flash disk), a removable hard disk, or another optical disc storage or a disk storage medium, or another magnetic storage device, or any other medium that can carry or store expected program code in a form of an instruction or a data structure and can be accessed by a computer.

As used in this specification, the term "include" and similar terms should be understood as open inclusion, that is, "include but not limited to". The term "based on" should be understood as "at least partially based on". The term "one embodiment" or "this embodiment" should be understood as "at least one embodiment". Terms such as "first", "second", and the like may refer to different objects or a same object, and are used to distinguish between specified objects, but do not imply a specific spatial order, a time order, an importance order, or the like of the specified objects. In some embodiments, a value, a process, a selected item, a determined item, a device, an apparatus, a means, a part, a component, or the like is referred to as "optimal", "lowest", "highest", "minimum", "maximum", or the like. It should be understood that such a description is intended to indicate that a selection may be made among many available functional selections, and that such a selection does not need to be better, lower, higher, smaller, larger, or otherwise preferred than other selections in other aspects or in all aspects. As used in this specification, the term "determining" may cover a variety of actions. For example, "determining" may include operating, calculation, processing, export, investigation, lookup (for example, lookup in a table, database, or another data structure), finding, and the like. In addition, "determining" may include receiving (for example, receiving information), accessing (for example, accessing data in a memory), and the like. In addition, "determining" may include parsing, selection, choice, establishment, and the like.

## Claims

1. A method, comprising:
sending a first data matrix; and
sending a projection result and a projection residual of a second data matrix, wherein
the projection result is determined based on a projection matrix derived from the second data matrix and the first data matrix, and
the projection residual is determined based on the second data matrix and the projection result.

2. A method, comprising:
receiving a first data matrix;
receiving a projection result and a projection residual of a second data matrix; and
obtaining, based on the first data matrix, the projection result, and the projection residual, the second data matrix or an approximate matrix of the second data matrix, wherein
the projection result is determined based on a projection matrix derived from the second data matrix and the first data matrix, and
the projection residual is determined based on the second data matrix and the projection result.

3. The method according to claim 1 or 2, wherein the projection matrix is determined in the following manner:
selecting a predetermined quantity of columns from a reference matrix to form the projection matrix, wherein the reference matrix is the first data matrix or a submatrix of the first data matrix.

4. The method according to claim 1 or 2, wherein the projection matrix is determined in the following manner:
determining a projection basis matrix based on a reference matrix; and
selecting a predetermined quantity of columns from the projection basis matrix to form the projection matrix, wherein
the reference matrix is the first data matrix or a submatrix of the first data matrix.

5. The method according to claim 4, wherein determining the projection basis matrix based on the reference matrix comprises:
performing matrix decomposition on the reference matrix to determine the projection basis matrix.

6. The method according to claim 5, wherein the matrix decomposition comprises any one of the following:
low-rank matrix approximation (LRMA) decomposition, SVD decomposition, or QR decomposition.

7. The method according to any one of claim 1 or claims 3 to 6, further comprising: sending at least one of the following:
first indication information, indicating a quantity of columns of the projection matrix;
second indication information, indicating whether the projection matrix is based on the reference matrix or based on a projection basis matrix obtained by performing LRMA decomposition on the reference matrix; or
third indication information, indicating a position of a column of the projection matrix in the reference matrix or the projection basis matrix.

8. The method according to any one of claims 2 to 6, further comprising: receiving at least one of the following:
first indication information, indicating a quantity of columns of the projection matrix;
second indication information, indicating whether the projection matrix is based on the reference matrix or based on a projection basis matrix obtained by performing LRMA decomposition on the reference matrix; or
third indication information, indicating a position of a column of the projection matrix in the reference matrix or the projection basis matrix.

9. The method according to claim 1, wherein determining the projection matrix comprises:
selecting a subspace of a predetermined quantity of dimensions from a column space obtained by spanning a reference matrix, wherein the projection matrix represents the subspace, and
the reference matrix is the first data matrix or a submatrix of the first data matrix.

10. The method according to claim 9, wherein the subspace is selected to minimize a norm of a projection residual obtained by projecting the second data matrix onto the projection matrix.

11. The method according to claim 9 or 10, wherein determining the projection matrix comprises:
performing QR decomposition on the reference matrix to determine a matrix Q;
performing singular value decomposition on a product of a transpose of the matrix Q and the data matrix to obtain an eigenvector matrix;
determining a subspace selection matrix based on a predetermined quantity of leading columns of the eigenvector matrix; and
determining the projection matrix based on the subspace selection matrix and the reference matrix.

12. The method according to claim 9 or 10, wherein determining the projection matrix comprises:
performing QR decomposition on the reference data ***C*** to obtain a matrix Q, wherein $C = Q \times R ,$wherein $Q ∈ {ℝ}^{m \times k}$ with orthogonal columns, and $R ∈ {ℝ}^{k \times k}$;
performing SVD decomposition on a matrix ***Q**^{T}**G*** to obtain a matrix U, wherein G is the second data matrix; ${Q}^{T} G = U Σ {V}^{T}$
obtaining first *d* columns of the matrix ***U***, which are denoted as ***Ŝ****;
obtaining a subspace selection matrix ***S**** = ***R*⁻¹*Ŝ****; and
obtaining the projection matrix ***P**** = ***C*** × ***S****.

13. The method according to claim 9 or 10, wherein determining the projection matrix comprises:
solving the following optimization problem, wherein G is the second data matrix and C is the reference matrix: ${S}^{∗} = {argmin}_{\begin{matrix}P = C \times S \\ S ∈ {ℝ}^{k \times d}\end{matrix}} {\left‖G-P{\left({P}^{T}P\right)}^{- 1}{P}^{T}G\right‖}_{F}^{2} .$

14. The method according to any one of claim 1 and claims 9 to 11, further comprising:
sending fourth indication information, wherein the fourth indication information indicates the subspace selection matrix, and the subspace selection matrix is used together with the reference matrix to determine the projection matrix.

15. The method according to any one of claim 2 and claims 9 to 11, further comprising:
receiving fourth indication information, wherein the fourth indication information indicates the subspace selection matrix, and the subspace selection matrix is used together with the reference matrix to determine the projection matrix.

16. The method according to claim 1, further comprising:
receiving feedback information for the first data matrix; and
determining the second data matrix based on the feedback information and the first data matrix.

17. The method according to claim 1, further comprising:
sending fifth indication information for the first data matrix; and
determining the second data matrix based on the fifth indication information and the first data matrix.

18. The method according to claim 2, further comprising:
sending feedback information for the first data matrix, wherein the feedback information is used together with the first data matrix to determine the second data matrix.

19. The method according to claim 2, further comprising:
receiving fifth indication information for the first data matrix, wherein the fifth indication information is used together with the first data matrix to determine the second data matrix.

20. The method according to any one of claims 16 to 19, wherein the feedback information or the fifth indication information comprises at least one of the following:
subset indication information, indicating the first data matrix or a submatrix of the first data matrix; or
confidence information, indicating a confidence level of the first data matrix.

21. The method according to any one of claims 1 to 20, wherein the first data matrix has a first granularity, the second data matrix has a second granularity, and the first granularity is greater than the second granularity.

22. The method according to claim 21, wherein at least one of the following is comprised:
the first data is sampling data of a geographical space at a first resolution, the second data matrix is sampling data of the geographical space at a second resolution higher than the first resolution, and the subset indication information indicates spatial location information of the subset of the first data matrix; or
the first data matrix is a plurality of cluster centers of a plurality of data classes determined by performing clustering on raw data, the second data matrix is data contained in one or more data classes among the plurality of data classes, and the subset indication information indicates one or more cluster centers, among the plurality of cluster centers, corresponding to the one or more data classes.

23. The method according to any one of claims 1 to 22, wherein the reference matrix is determined based on at least one of the following:
the feedback information for the first data matrix;
the submatrix of the first data matrix; or
the first data matrix.

24. The method according to any one of claims 2 to 23, wherein
the second data matrix is not divided and corresponds as a whole to the reference matrix; or
the second data matrix is divided into a plurality of data groups, and the plurality of data groups respectively correspond to a plurality of submatrices of the reference matrix.

25. The method according to any one of claim 1, claims 3 to 7, claims 9 to 14, claim 16, claim 17, and claims 20 to 24, further comprising sending at least one of the following:
first configuration information, indicating whether the feedback information for the first data matrix is based on an index or a bitmap;
second configuration information, indicating whether confidence feedback for the first data matrix is enabled;
third configuration information, indicating whether the first data matrix is based on a geographical location or clustering;
fourth configuration information, indicating whether the reference matrix is determined based on the feedback information for the first data matrix or based on the first data matrix; or
fifth configuration information, indicating whether the second data matrix corresponds as a whole to the reference matrix, or whether the second data matrix is divided into the plurality of data groups that correspond to the plurality of submatrices of the reference matrix.

26. The method according to claim 25, wherein at least one of the first configuration information, the second configuration information, the third configuration information, the fourth configuration information, or the fifth configuration information is sent before the first data matrix is sent.

27. The method according to any one of claim 2, claim 8, claim 15, and claims 18 to 24, further comprising receiving at least one of the following:
first configuration information, indicating whether the feedback information for the first data matrix is based on an index or a bitmap;
second configuration information, indicating whether confidence feedback for the first data matrix is enabled;
third configuration information, indicating whether the first data matrix is based on a geographical location or clustering;
fourth configuration information, indicating whether the reference matrix is determined based on the feedback information for the first data matrix or based on the first data matrix; or
fifth configuration information, indicating whether the second data matrix corresponds as a whole to the reference matrix, or whether the second data matrix is divided into the plurality of data groups that correspond to the plurality of submatrices of the reference matrix.

28. The method according to claim 27, wherein at least one of the first configuration information, the second configuration information, the third configuration information, the fourth configuration information, or the fifth configuration information is received before the first data matrix is sent.

29. The method according to any one of claim 1, claims 3 to 7, claims 9 to 14, claim 16, claim 17, and claims 20 to 26, further comprising sending at least one of the following:
sixth configuration information, indicating whether the projection matrix is based on a column space of the reference matrix or based on a subspace of the column space; or
seventh configuration information, used to identify the reference matrix from the first data matrix.

30. The method according to claim 29, wherein at least one of the sixth configuration information or the seventh configuration information is sent before the projection result and the projection residual are sent.

31. The method according to any one of claim 2, claim 8, claims 18 to 24, claim 27, and claim 28, further comprising receiving at least one of the following:
sixth configuration information, indicating whether the projection matrix is based on a column space of the reference matrix or based on a subspace of the column space; or
seventh configuration information, used to identify the reference matrix from the first data matrix.

32. The method according to claim 31, wherein at least one of the sixth configuration information or the seventh configuration information is received before the projection result and the projection residual are sent.

33. An apparatus, comprising:
a first data matrix sending module, configured to send a first data matrix; and
a result sending module, configured to send a projection result and a projection residual of a second data matrix, wherein
the projection result is determined based on a projection matrix derived from the second data matrix and the first data matrix, and
the projection residual is determined based on the second data matrix and the projection result.

34. An apparatus, comprising:
a first data matrix receiving module, configured to receive a first data matrix;
a result receiving module, configured to receive a projection result and a projection residual of a second data matrix; and
a second data matrix obtaining module, configured to obtain, based on the first data matrix, the projection result, and the projection residual, the second data matrix or an approximate matrix of the second data matrix, wherein
the projection result is determined based on a projection matrix derived from the second data matrix and the first data matrix, and
the projection residual is determined based on the second data matrix and the projection result.

35. A system, comprising the apparatuses according to claims 33 and 34.

36. A device, comprising: a processor and a memory that stores instructions, wherein when the instructions are executed by the processor, the terminal device is enabled to perform the method according to any one of claims 1 to 32.

37. A computer-readable storage medium, wherein the computer-readable storage medium stores instructions, and when the instructions are executed by an electronic device, the electronic device is enabled to perform the method according to any one of claims 1 to 32.

38. A computer program product, wherein the computer program product comprises instructions, and when the instructions are executed by an electronic device, the electronic device is enabled to perform the method according to any one of claims 1 to 32.
